# EUROPEAN PATENT APPLICATION

(11) **EP 4 632 528 A1**
(43) Date of publication of application: **15.10.2025**
(21) Application number: 24780985.8
(22) Date of filing: 19.01.2024
(51) Int. Cl.: G06F 1/16, G09F 9/30

(54) **ELECTRONIC DEVICE COMPRISING FLEXIBLE DISPLAY**

(30) Priority: 29.03.2023 KR 20230041342; 10.04.2023 KR 20230046732
(71) Applicant: Samsung Electronics Co., Ltd., Suwon-si, Gyeonggi-do 16677 (KR)
(72) Inventor: KIM, Taejeong, Suwon-si Gyeonggi-do 16677 (KR); PARK, Byounggyu, Suwon-si Gyeonggi-do 16677 (KR); NAM, Kiju, Suwon-si Gyeonggi-do 16677 (KR); SON, Kidoc, Suwon-si Gyeonggi-do 16677 (KR); SONG, Kyunghwan, Suwon-si Gyeonggi-do 16677 (KR); LEE, Garam, Suwon-si Gyeonggi-do 16677 (KR); CHOI, Hyunsuk, Suwon-si Gyeonggi-do 16677 (KR); KIM, Moonsoo, Suwon-si Gyeonggi-do 16677 (KR); HAN, Jungmoo, Suwon-si Gyeonggi-do 16677 (KR)
(74) Representative: HGF
(86) International application number: PCT/KR2024/000953
(87) International publication number: WO 2024/204990

(57) **Abstract**

A slidable electronic device, may comprise: a flexible display configured such that at least a portion thereof is deformable; and a support plate disposed on the rear of the flexible display and having elastic parts and support parts alternately positioned, the elastic parts each comprising a plurality of through-holes in at least a portion thereof, and the support parts being formed so as to protrude with respect to the elastic parts. The support plate may comprise guide parts which extend from end portions of the support parts and are each formed such that at least a portion thereof has a curvature.

## Description

### [Technical Field]

Various embodiments of the disclosure relate to an electronic device including a flexible display.

### [Background Art]

Electronic devices are slimmed down, with increased rigidity, and enhanced to differentiate functional elements while reinforcing their design aspects. Electronic devices are evolving to have various shapes as well as their stereotypical rectangular shape. When an electronic device uses a flexible display, it is possible to provide ease to carry and a large screen with a transformable structure. An example transformable structure adopting a flexible display in an electronic device may be a structure (e.g., a rollable structure or a slidable structure) capable of changing the display area of the display through support by housings that are slidable on each other. For example, the rollable structure may be configured to allow the flexible display to be rolled or unrolled, and the slidable structure may be configured to allow the flexible display to be partially hidden in or exposed to the outside of the housing.

### [Detailed Description of the Invention]

### [Technical Solution]

The slidable electronic device may have a structure in which the housing moves in a sliding manner to extend or reduce the screen size by the flexible display. The sliding-type electronic device may have a support plate at least partially bendable and supporting the flexible display. Bars that permit the flexible display to move along the rail frame may be affixed to the rear side of the support plate. However, the manufacturing process becomes complicated in the process of attaching bars separately from the support plate, and environmentally harmful materials may be used for attachment. Prolonged use of the sliding-type electronic device may weaken the adhesion of the bars affixed to the support plate due to housing operation, potentially causing them to detach from the support plate.

Various embodiments of the disclosure may support a flexible display of an electronic device using a support plate integrally formed without attaching a separate support bar.

A slidable electronic device according to an embodiment may comprise a flexible display configured to be at least partially deformable, and a support plate disposed on a rear side of the flexible display, and including an elastic portion at least partially having a plurality of through holes and a support portion protruding relative to the elastic portion, alternately arranged. The support plate may include a guide portion extending from an end portion of the support portion and at least partially having a curvature.

A slidable electronic device according to an embodiment may comprise a flexible display configured to be at least partially deformable, and a support plate disposed on a rear side of the flexible display, and having an elastic portion including a plurality of through holes and a support portion without a through hole alternately positioned along a length direction of the support plate. The support portion may include a guide portion extending from a lengthwise end portion of the support portion and at least partially having a curvature.

According to an embodiment, a support plate for supporting a flexible display including a flat area and a bending area may comprise an elastic portion and a support portion alternately disposed, wherein the elastic portion includes a fixed area corresponding to the flat area and a plurality of through holes positioned on the same plane as the fixed area and integrally extending from one side of the fixed area, and the support portion integrally extending and protruding from the elastic portion, a flexible area corresponding to the bending area, and a guide portion integrally extending from one end not contacting the elastic portion in the support portion and bent so that at least a portion of the guide portion has a curvature.

According to various embodiments of the disclosure, an electronic device including a flexible display may prevent separation of the configuration of the support plate despite long-term use by disposing the support plate having a support structure integrally formed in the flexible area on the rear side of the flexible display.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [Brief Description of Drawings]

FIG. 1 is a view illustrating an electronic device in a network environment according to various embodiments;
FIGS. 2A and 2B are front and rear views illustrating an electronic device in a closed state according to an embodiment;
FIGS. 3A and 3B are front and rear views illustrating an electronic device in an open state according to an embodiment;
FIG. 4 is an exploded perspective view illustrating an electronic device according to an embodiment;
FIG. 5A is a cross-sectional view of the electronic device, taken along line 5a-5a of FIG. 2A according to an embodiment;
FIG. 5B is a cross-sectional view of the electronic device, taken along line 5b-5b of FIG. 3A according to an embodiment;
FIG. 6 is a view illustrating a coupling relationship between a flexible display and a support plate in an electronic device according to an embodiment;
FIG. 7 is a plan view illustrating a support plate according to an embodiment;
FIG. 8 is an enlarged plan view illustrating portion M1 of FIG. 7;
FIG. 9 is a cross-sectional view taken along line D-D' of FIG. 7;
FIG. 10 is an enlarged perspective view illustrating portion M2 of FIG. 8;
FIG. 11 is a view illustrating a state in which a support portion of a support plate is viewed from a lateral side;
FIG. 12 is an enlarged perspective view illustrating portion M3 of FIG. 7;
FIGS. 13A and 13B are views illustrating a process of forming a guide portion integrally extending from a support portion according to an embodiment;
FIGS. 14A and 14B are views illustrating a process of forming a guide portion integrally extending from a support portion and a reinforcement portion disposed on an upper side of the support portion according to an embodiment;
FIG. 15 is a view illustrating a portion of a support plate provided with a reinforcement portion reinforced in multiple layers according to an embodiment;
FIG. 16 is a view illustrating a portion of a support plate including a guide portion having a rolled shape according to an embodiment;
FIGS. 17A and 17B are views illustrating a portion of a support plate having a shape of a guide portion according to another embodiment;
FIG. 18 is an exploded perspective view illustrating a support plate and a rail frame according to an embodiment;
FIG. 19 is a perspective view illustrating a state in which a support plate and a rail frame are coupled to each other according to an embodiment;
FIG. 20 is a cross-sectional view taken along line E-E' of FIG. 19;
FIG. 21 is a view illustrating a guide rail of a rail frame according to an embodiment;
FIG. 22 is a plan view illustrating a support plate according to another embodiment;
FIG. 23 is a cross-sectional view taken along line F-F' of FIG. 22; and
FIG. 24 is an enlarged perspective view illustrating portion M4 of FIG. 22.

Reference may be made to the accompanying drawings in the following description, and specific examples that may be practiced are shown as examples within the drawings. Other examples may be utilized and structural changes may be made without departing from the scope of the various examples.

### [Mode for the Invention]

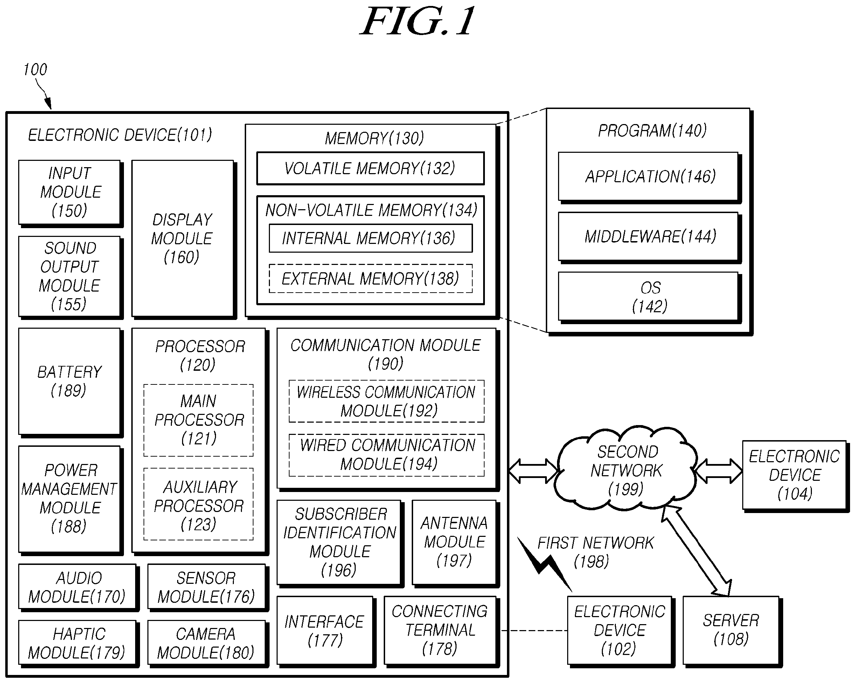

Various embodiments of the disclosure are merely exemplified herein with reference to FIGS. 1 to 24, to describe the principle of the disclosure, and should not be interpreted as limiting the scope of the disclosure. Those skilled in the art will understand that the principle of the disclosure may be implemented in any appropriately disposed system or device.

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108.According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197.In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134.According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101.The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101.The input module 150 may include, for example, a microphone, a mouse, a keyboard, keys (e.g., buttons), or a digital pen (e.g., a stylus pen).

The sound output module 155 may output sound signals to the outside of the electronic device 101.The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101.The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102).According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101.According to an embodiment, the power management module 188 may be implemented as at least part of, for example, a power management integrated circuit (PMIC).

The battery 189 may supply power to at least one component of the electronic device 101.According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)).These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral side) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108.For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101.The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

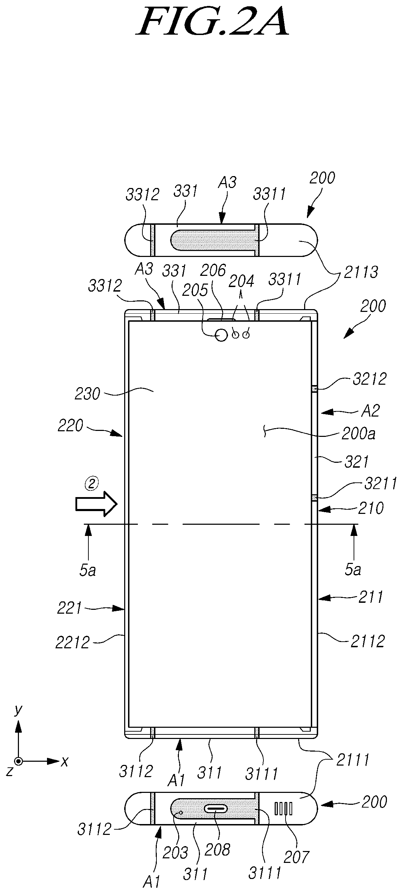

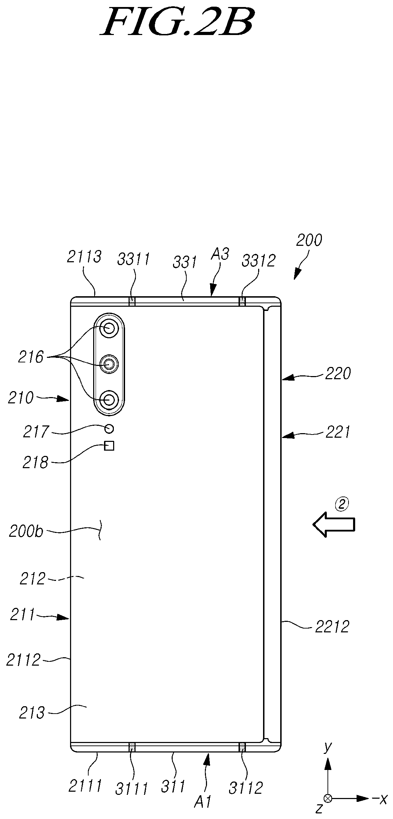

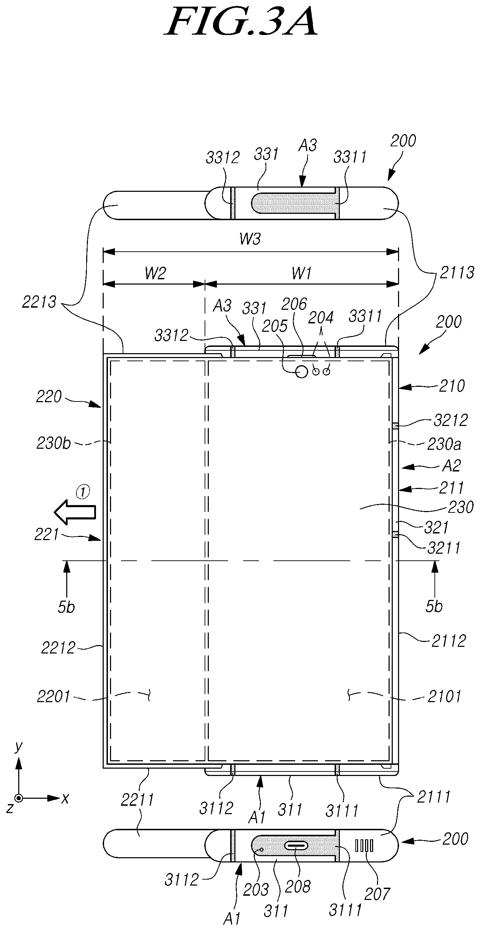

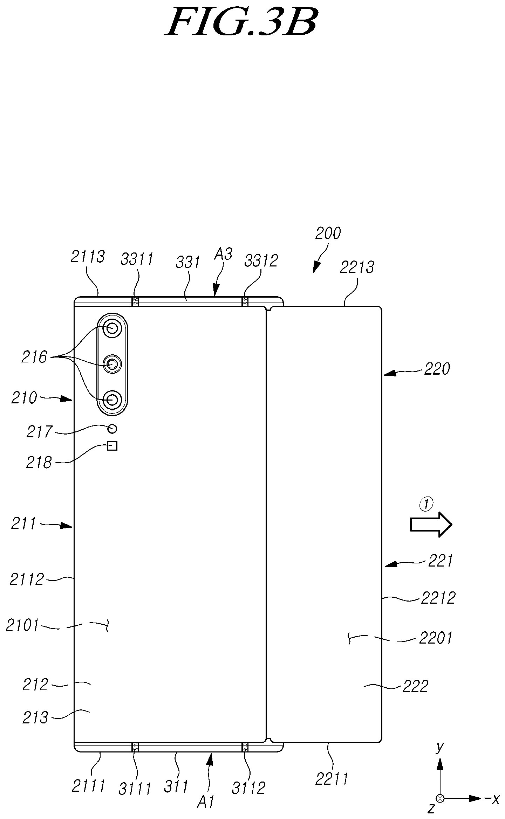

FIGS. 2A and 2B are front and rear views illustrating an electronic device in a closed state according to an embodiment. FIGS. 3A and 3B are front and rear views illustrating an electronic device in an open state according to an embodiment.

According to an embodiment, in FIGS. 2A and 2B, or FIGS. 3A and 3B, the electronic device 200 may be at least partially similar to the electronic device 101 of FIG. 1, or may further include other embodiments of the electronic device 101.

Referring to FIGS. 2A and 2B or FIGS. 3A and 3B, an electronic device 200 according to an embodiment may include a flexible display 230 (e.g., an expandable display, a stretchable display, a rollable display, or a display assembly) (e.g., the display module 160 of FIG. 1) fastened to be slidable or rollable. The flexible display 230 may have a structure in which at least two housings are stacked front to rear to be slidable in a designated direction (e.g., a left-right direction or an upper-lower direction). For example, the flexible display 230 may be driven so that the display area varies as one housing slides along another housing in a designated direction (e.g., the left-right direction or the upper-lower direction).

According to an embodiment, the electronic device 200 may include a first housing 210 (e.g., a first housing structure or a base housing), a second housing 220 (e.g., a second housing structure or a slide housing), or a flexible display 230. For example, the second housing 220 may be coupled to the first housing 210 to be movable in a designated direction (e.g., the x-axis direction (the right direction)) and within a designated distance from the first housing 210. The flexible display 230 may be disposed on the front side of the electronic device 200 to be supported through at least a portion of the first housing 210 and the second housing 220.

According to an embodiment, the electronic device 200 may switch from the open state to the closed state as at least a portion of the second housing 220 is received in a first receiving portion 2101 of the first housing 210. Here, the first receiving portion 2101 may refer to a space formed inside the first housing 210. The electronic device 200 may switch from the closed state to the open state as at least the portion of the second housing 220, received in the first receiving portion 2101, is slid out of the first receiving portion 2101. In the disclosure, the open state may refer to, e.g., a state in which the second area 230b of the flexible display 230 is maximized, and the closed state may refer to, e.g., a state in which the second area 230b of the flexible display 230 disappears or is minimized.

According to an embodiment, as the second housing 220 slides along a designated direction (e.g., the x-axis direction (direction ①) or the -x-axis direction (direction ②)) from the first housing 210, the electronic device 200 may lead to a change in the display area of the flexible display 230.

According to an embodiment, the display area of the flexible display 230 may vary depending on the slide-in operation (e.g., the movement in the x-axis direction (direction ②)) or the slide-out operation (e.g., the movement in the -x-axis direction (direction ①)). The flexible display 230 may be drawn in or out by, e.g., an external force (e.g., the user's manipulation) or an intemal force (e.g., the operation of the driving module 400). The slide-in operation may be a series of operations for reducing the size of the display area by the flexible display 230. The slide-out operation may be a series of operations for increasing the size of the display area by the flexible display 230. Hereinafter, for convenience of description, a state in which the display area of the flexible display 230 is maximized by the slide-out operation is referred to as an open state, and a state in which the display area of the flexible display 230 is minimized by the slide-in operation is referred to as a closed state.

According to an embodiment, at least a portion of the flexible display 230 may be configured to be deformable or bendable.

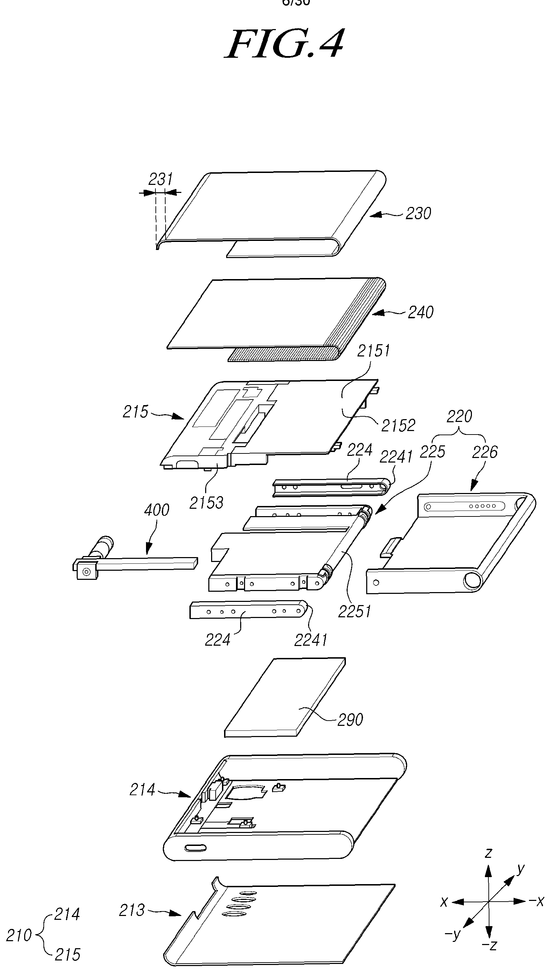

According to an embodiment, the flexible display 230 may be disposed so that the first area 230a (or the flat area, the non-flexible area) corresponding to at least a portion is not received in the first receiving portion 2101 of the first housing 210 or the second receiving portion 2201 of the second housing 220 while being supported by the support plate (e.g., the support plate 240 of FIG. 4). Here, the first area 230a may refer to an area disposed to be always visible from the outside regardless of the insertion or withdrawal of the flexible display 230. The first area 230a may be used, e.g., for the electronic device 200 to display an image according to an operation on the front side. The first area 230a of the flexible display 230 may be disposed to be visible from the outside (e.g., the front side). The first area 230a may include an edge portion (e.g., the edge portion 231) of the display. The edge portion (e.g., the edge portion 231) of the flexible display 230 may maintain a predetermined area regardless of draw-in or draw-out.

According to an embodiment, the flexible display 230 may be received in the first receiving portion 2101 of the first housing 210 or the second receiving portion 2201 of the second housing 220 while a second area 230b (or a bending area, a deformable area, a bendable area, or a flexible area) corresponding to at least a portion is supported by the support plate (e.g., the support plate 240 of FIG. 4). Here, the second area 230b may be an area in which an area visible from the outside varies according to the slide-in or slide-out of the flexible display 230. The second area 230b may be deactivated not to be used to display the image according to the operation of the electronic device 200 or be activated to be used to display the image according to the operation, on the rear side, of the electronic device 200. The second area 230b of the flexible display 230 received in the receiving portion (e.g., the first receiving portion 2101 or the second receiving portion 2201) may be disposed to be visible from the outside or to be visible from the rear side alone, but not from the front side. The second area 230b may be enlarged by the slide-out operation or shrunken by the slide-in operation. The second area 230b may be activated to be used to display the image according to the operation of the electronic device 200 only on the portion visible from the outside as at least a portion is slid out.

According to an embodiment, the electronic device 200 may include a front side200a (e.g., a first surface), a rear side 200b (e.g., a second surface) facing away from the front side 200a, and a lateral side (not shown) surrounding a space between the front side 200a and the rear side 200b. The lateral side may be at least one of an upper side, a lower side, a left side, or a right side with respect to the front side 200a. However, this is an example, and the first side member 211 and the second side member 221 may have sides corresponding to one or two of the four sides of the first housing 210 and the second housing 220. Hereinafter, for convenience of description, a case of having three sides is described as an example.

According to an embodiment, the electronic device 200 may include a first housing 210 and a second housing 220. The first housing 210 may include a first side member 211. The second housing 220 may include a second side member 221. The first side member 211 may form an edge corresponding to at least three sides (e.g., the upper, lower, and right sides of the front side) among the four sides of the first housing 210. The second side member 221 may form an edge corresponding to at least three sides (e.g., the upper, lower, and left sides of the front side) among the four sides of the second housing 220.

According to an embodiment, the first side member 211 may include at least one of a first lateral side 2111 (e.g., a lower side of the first housing 210), a second lateral side 2112 (e.g., a right side of the first housing 210), or a third lateral side 2113 (e.g., an upper side of the first housing 210) with respect to the front side. The first lateral side 2111 may have a first length along a first direction (e.g., x axis direction). The second lateral side 2112 may extend to have a second length longer than the first length along a direction (e.g., y axis direction) substantially perpendicular to the first lateral side 2111. The third lateral side 2113 may extend substantially parallel to the first lateral side 2111 from the second lateral side 2112 and may have the first length. The first side member 211 may be, e.g., at least partially formed of a conductive material (e.g., metal). The first side member 211 may include, e.g., a first supporting member 212 extending to at least a portion of the first receiving unit 2101 of the first housing 210.

According to an embodiment, the second side member 221 may include at least one of a fourth lateral side 2211 (e.g., a lower side of the second housing 220), a fifth lateral side 2212 (e.g., a left side of the second housing 220), or a sixth lateral side 2213 (e.g., an upper side of the second housing 220) with respect to the front side. The fourth lateral side 2211 at least partially corresponds to the first lateral side 2111 and may have a third length. The fifth lateral side 2212 may extend substantially parallel to the second lateral side 2112 from the fourth lateral side 2211 and may have a fourth length larger than the third length. The sixth lateral side 2213 may extend substantially parallel to the third lateral side 2113 from the fifth lateral side 2212 and may have the third length. The second side member 221 may be, e.g., at least partially formed of a conductive material (e.g., metal). The second side member 221 may include, e.g., a second supporting member 222 extending to at least a portion of the second receiving unit 2201 of the second housing 220.

According to an embodiment, the first lateral side 2111 and the fourth lateral side 2211 or the third lateral side 2113 and the sixth lateral side 2213 may be coupled to be slidable on each other. In this case, the whole or part of the fourth lateral side 2211 overlaps the first lateral side 2111 and may thus be disposed to be substantially invisible from the outside. Further, the whole or part of the sixth lateral side 2213 overlaps the third lateral side 2113 and may thus be disposed to be substantially invisible from the outside. For example, the fourth lateral side 2211 or the sixth lateral side 2213 may be disposed to be at least partially visible from the outside in the closed state.

According to an embodiment, when drawn in, the second supporting member 222 included in the second side member 221 overlaps the first supporting member 212 included in the first side member 211 and may thus be disposed to be substantially invisible from the outside. For example, in a state not fully slid in, a portion of the second supporting member 222 may overlap the first supporting member 212 to be invisible from the outside, and the rest of the second supporting member 222 may be disposed not to overlap the first supporting member 212 to be visible from the outside.

According to an embodiment, the electronic device may include a rear cover 213. The rear cover 213 may be disposed on at least a portion of the first housing 210, on the rear side 200b of the electronic device. The rear cover 213 may be disposed through at least a portion of, e.g., the first supporting member 212. The rear cover 213 may be formed integrally with, e.g., the first side member 211. The rear cover 213 may be formed of, e.g., polymer, laminated or colored glass, ceramic, metal (e.g., aluminum, stainless steel (STS), or magnesium), or a combination of at least two thereof. The rear cover 213 may extend, e.g., to at least a portion of the first side member 211. At least a portion of the first supporting member 212 may be replaced with, e.g., the rear cover 213. The electronic device 200 may further include another rear cover (e.g., second rear cover) which is disposed on, or replaced with, at least a portion of the second supporting member 222, in the second housing 220.

According to an embodiment, the electronic device 200 may include a flexible display 230 disposed to be supported by at least a portion of the first housing 210 or the second housing 220. The flexible display 230 may include a first area 230a (e.g., flat portion) and/or a second area 230b (e.g., a bent portion, a bendable portion, or a rolling portion). The first area 230a may be an area that is always visible from the outside of the entire area of the flexible display 230. During draw-in, the second area 230b which may extend from the first area 230a may be received into the first receiving portion 2101 of the first housing 210 or the second receiving portion 2201 of the second housing 220 to be invisible from the outside and, during draw-out, drawn out of the first receiving portion 2101 or second receiving portion 2201 to be visible from the outside. The first area 230a may be disposed to be supported by the first housing 210. The second area 230b may be disposed to be at least partially supported by the support plate (e.g., the support plate 240 of FIG. 4). The area drawn out of the first receiving portion 2101 or second receiving portion 2201, of the first area 230a or the second area 230b, may be activated to display an image, and the area received in the first receiving portion 2101 or second receiving portion 2201, of the second area 230b may be deactivated not to display an image.

According to an embodiment, the second area 230b of the flexible display 230 may extend from the first area 230a while being supported by the support plate (e.g., the support plate 240 of FIG. 4) in a state in which the second housing 220 has been drawn out along a designated direction (① direction). To this end, the second area 230b may form substantially the same plane as the first area 230a and may be disposed to be visible from the outside.

According to an embodiment, the second area 230b of the flexible display 230 may be received in the first receiving portion 2101 of the first housing 210 or the second receiving portion 2201 of the second housing 220 to be invisible from the outside or to be invisible from the front while being visible from the back, in a state drawn in along a designated direction (② direction).

According to an embodiment, an opposite end of the variable portion (e.g., second area 230b) of the flexible display 230 may include a fixed portion (e.g., edge portion 231) fixed by the first housing 210. The fixed portion (e.g., edge portion 231) may be formed by being bent from one side of the flexible display 230 to the lateral side (e.g., the second lateral side 2112) of the first housing 210. The first portion (e.g., edge portion 231) may include the whole or part of the lateral side (e.g., the second lateral side 2112) of the first housing 210.

According to an embodiment, the first housing 210 and/or the second housing 220 may be operated to slide on each other so that the entire width is variable. As an example, in the closed state, the electronic device 200 may be configured to have a first width W1 between the second lateral side 2112 and the fourth lateral side 2212. Further, in the open state, the electronic device 200 may be configured to have a third width W3 larger than the first width W1 as at least a portion of the support plate (e.g., the support plate 240 of FIG. 4) received in the second receiving portion 2201 of the second housing 220 is moved to have an additional second width W2. In the closed state, the flexible display 230 included in the electronic device 200 may have a display area substantially corresponding to the first width W1 and, in the open state, have an extended display area substantially corresponding to the third width W3.

According to an embodiment, the draw-in and/or draw-out of the electronic device 200 may be automatically performed. The electronic device 200 may receive, e.g., a draw-in or draw-out request and operate the driving module (e.g., the driving module 400 of FIG. 4) disposed therein. The draw-in or draw-out request may be performed through a designated operation button disposed in the electronic device 200 and/or through a touch to a corresponding object displayed on the flexible display 230. As an example, upon detecting a draw-in and/or draw-out event, the processor (e.g., the processor 120 of FIG. 1) of the electronic device 200 may operate to control the slide of the second housing 220 through the driving module 400. The processor (e.g., the processor 120 of FIG. 1) of the electronic device 200 may operate to control the display screen of the flexible display 230 to execute an application program or display an object in various manners, corresponding to the changed display area of the flexible display 230 according to, e.g., the closed state, open state, or intermediate state (including, e.g., a free stop state).

According to an embodiment, the electronic device 200 may include at least one of an input module (e.g., the microphone 203), a sound output module (e.g., the receiver 206 for phone calls or speaker 207), sensor modules 204 and 217, a camera module (e.g., the first camera module 205 or second camera module 216), a connector port 208, a key input device (not shown), or an indicator (not shown), disposed in the first receiving portion 2101 of the first housing 210. The electronic device 200 may be configured to omit at least one of the above-described components or add other components. At least one of the above-described components may be disposed in the second receiving portion 2201 of the second housing 220.

According to an embodiment, the input module may include a plurality of microphones disposed to detect the direction of sound. The sound output module may include, e.g., the receiver 206 for phone calls and the speaker 207. In the open state, the speaker 207 may be disposed to face the outside through at least one speaker hole formed in the first housing 210. The connector port 208 may be disposed to face the outside through the connector port formed in the first housing 210. The receiver 206 for phone calls may include a speaker (e.g., a piezo speaker) operated without a separate speaker hole.

According to an embodiment, the sensor modules 204 and 217 may generate an electrical signal or data value corresponding to an internal operating state or external environmental state of the electronic device 200. The sensor modules 204 and 217 may include a first sensor module 204 (e.g., proximity sensor or illuminance sensor) disposed on the front side 200a of the electronic device 200 and/or a second sensor module 217 (e.g., hear rate monitoring (HRM) sensor) disposed on the rear sensor 200b. The first sensor module 204 may be disposed under the flexible display 230, e.g., on the front side 200a of the electronic device 200. The first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, an air pressure sensor, a magnetic sensor, an accelerometer, a grip sensor, a color sensor, an infrared (IR) sensor, a biometric sensor, a temperature sensor, or a humidity sensor.

According to an embodiment, the camera module may include a first camera module 205 disposed on the front side 200a of the electronic device 200 and a second camera module 216 disposed on the rear side 200b. The first and/or second camera module 205 and 216 may include one or more lenses, an image sensor, and/or an image signal processor. For example, the first camera module 205 may be disposed under the flexible display 230 and be configured to capture a subject through a portion of the active area of the flexible display 230. The flash 218 may be disposed on the second camera module 216. The flash 218 may include, e.g., a light emitting diode (LED) or a xenon lamp.

According to an embodiment, the first camera module 205 among the camera modules or some sensor module 204 among the sensor modules 204 and 217 may be disposed to detect the external environment through the flexible display 230. For example, the first camera module 205 or some sensor module 204 may be disposed to contact the external environment through an opening or a transmissive area formed in the flexible display 230, in the first receiving portion 2101 of the first housing 210. The area of the flexible display 230 facing the first camera module 205 may be a portion of the area displaying content and be formed as a transmissive area having a designated transmittance. The transmissive area may be formed to have a transmittance ranging from about 5% to about 20%. The transmissive area may include an area overlapping an effective area (e.g., an angle-of-view area) of the first camera module 205 through which light incident on the image sensor to obtain an image passes. For example, the transmissive area of the flexible display 230 may include an area having a lower pixel density and/or wiring density than the surrounding area. The transmissive area may replace the above-described opening. The camera module 205 may include an under display camera (UDC). The sensor module 204 may be disposed to perform its functions without being visually exposed through the flexible display 230 in the inner space of the electronic device 200.

According to an embodiment, the electronic device 200 may include at least one antenna (e.g., antenna radiator) A1, A2, and A3 electrically connected with the wireless communication circuit (e.g., the wireless communication module 192 of FIG. 1) disposed in the first receiving portion 2101 of the first housing 210. The at least one antenna A1, A2, and A3 may include at least one of a first antenna A1 disposed on the first lateral side 2111 of the first housing 210, a second antenna A1 disposed on the second lateral side 2112, and a third antenna A3 disposed on the third lateral side 2113. The electronic device 200 may further include at least one antenna disposed on the fifth lateral side 2212 of the second housing 220.

According to an embodiment, in the electronic device 200, the first antenna A1 may include a first conductive portion 311 segmented through at least one segmenter 3111 and 3112 which may be a non-conductive portion, on the first lateral side 2111 of the first side member 211. The first conductive portion 311 may be disposed to be segmented through a first segmenter 3111 and/or a second segmenter 3112 spaced apart from each other at a designated interval and be electrically connected with the wireless communication circuit (e.g., the wireless communication module 192 of FIG. 1).

According to an embodiment, in the electronic device 200, the second antenna A2 may include a second conductive portion 321 segmented through at least one segmenter 3211 and 3212 which is a non-conductive portion, on the second lateral side 2112 of the first side member 211. The second conductive portion 321 may be disposed to be segmented through a third segmenter 3211 and/or a fourth segmenter 3212 spaced apart from each other at a designated interval and be electrically connected with the wireless communication circuit (e.g., the wireless communication module 192 of FIG. 2).

According to an embodiment, in the electronic device 200, the third antenna A3 may include a third conductive portion 331 segmented through at least one segmenter 3311 and 3312 which is a non-conductive portion, on the third lateral side 2113 of the first side member 211. The third conductive portion 331 may be disposed to be segmented through a fifth segmenter 3311 and/or a sixth segmenter 3312 spaced apart from each other at a designated interval and be electrically connected with the wireless communication circuit (e.g., the wireless communication module 192 of FIG. 1).

According to an embodiment, the wireless communication circuit (e.g., the wireless communication module 192 of FIG. 1) in the electronic device 200 may be configured to transmit and/or receive a wireless signal in a designated first frequency band (e.g., about 800 MHz to 6000 MHZ) through the first conductive portion 311, the second conductive portion 321, and/or the third conductive portion 331. The wireless communication circuit (e.g., the wireless communication module 192 of FIG. 1) in the electronic device 200 may be configured to transmit and/or receive a wireless signal in a second frequency band (e.g., about 3 GHz to 100 GHz). The electronic device 200 may further include at least one antenna module for transmitting and/or receiving a signal of a first frequency band or at least one antenna module (e.g., 5G antenna module or antenna structure) for transmitting and/or receiving a signal of the second frequency band.

According to various embodiments of the disclosure, the electronic device 200 may include a driving module (e.g., the driving module 400 of FIG. 4) in an inner space for draw-in and/or draw-out. The driving module 400 may be disposed considering the relationship with other electronic components in the inner space of the electronic device 200, thereby contributing to slimming down the electronic device 200.

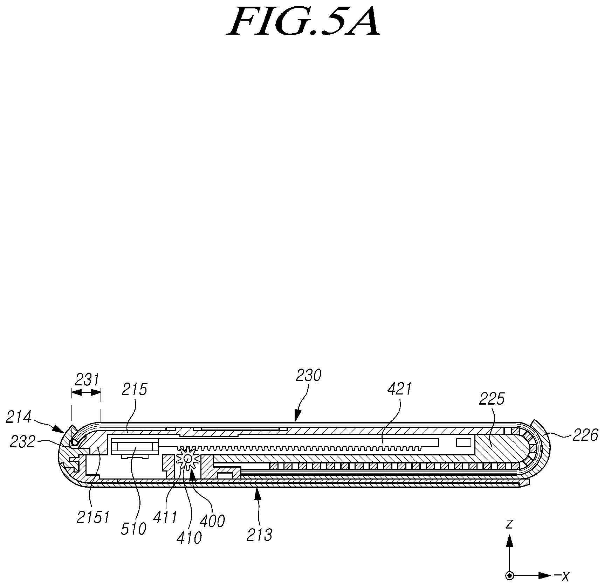

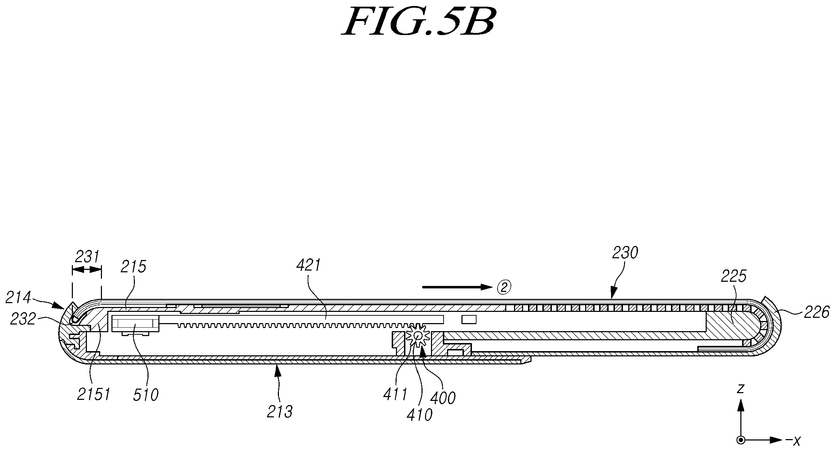

FIG. 4 is an exploded perspective view illustrating an electronic device (e.g. the electronic device 200 of FIGS. 2A to 3B) according to an embodiment. FIG. 5A is a cross-sectional view illustrating an electronic device (e.g., the electronic device 200 of FIGS. 2A to 3B), taken along line 5a-5a of FIG. 2A, according to an embodiment. FIG. 5B is a cross-sectional view illustrating an electronic device (e.g., the electronic device 200 of FIGS. 2A to 3B), taken along line 5b-5b of FIG. 3A, according to an embodiment.

According to an embodiment, the electronic device 200 may include a first housing 210 including a first receiving unit 2101, a second housing 220 including a second receiving unit 2201, and a support plate 240 (e.g., a bendable member), or a flexible display 230. The first housing 210 may be slidably coupled to the second housing 220. The support plate 240 may be configured to pivot in the second receiving portion 2201. The flexible display 230 may be disposed to be supported by at least a portion of the support plate 240 and the first housing 210.

According to an embodiment, the first housing 210 may include at least one of a cover housing 214 or a bracket housing 215. The first housing 210 may be provided, e.g., by coupling the cover housing 214 and the bracket housing 215. At least a portion of the cover housing 214 may include, or be replaced with, a first supporting member (e.g., the first supporting member 212 of FIG. 3B). The bracket housing 215 may include a first side 2151 facing in a second direction (e.g., z axis direction), a second side 2152 facing in a third direction (e.g., -z axis direction) opposite to the first side 2151, and a lateral side 2153 surrounding the space between the first side2151 and the second side 2152. According to an embodiment, the electronic device 200 may include an auxiliary cover that is disposed on at least a portion of the first side 2151 of the bracket housing 215 under the flexible display 230 to provide a flat surface.

According to an embodiment, the electronic device 200 may include a substrate 510 or at least one battery 290 disposed in the first receiving portion 2101 between the cover housing 214 and the second side 2152 of the bracket housing 215. The substrate 510 or the at least one battery 290 may be disposed on the bracket housing 215.

According to an embodiment, the electronic device 200 may include at least one of a camera module (e.g., the camera module 216 of FIG. 3B) or a sensor module (e.g., the sensor module 217 of FIG. 3B) disposed in the first receiving unit 2101.

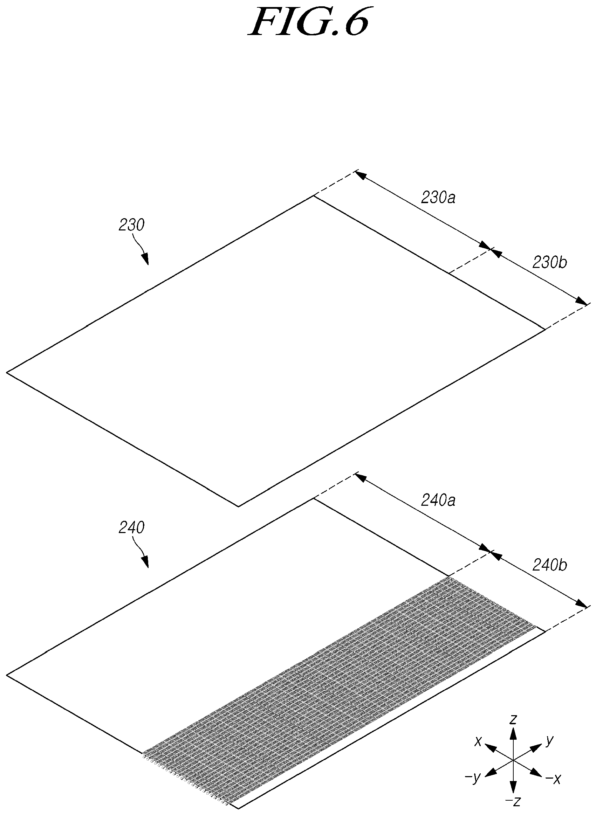

According to an embodiment, the support plate 240 may be disposed on at least a portion of the rear side of the flexible display 230. The front side of the support plate 240 may contact the rear side of the flexible display 230. The rear side of the flexible display 230 may indicate a side positioned opposite to a side from which light is emitted from the display panel including a plurality of pixels. The support plate 240 may contribute to durability of the flexible display 230. A flexible area (e.g., the flexible area 240b of FIG. 6) for providing flexibility may be provided in a portion of the support plate 240. A plurality of through holes or slits having a predetermined pattern may be formed in the flexible area 240b. The flexible area 240b may be implemented by, e.g., etching or shearing using a press die. The support plate 240 may reduce the influence of the load or stress on the flexible display 230 that may occur when the flexible display 230 is slid in or out. The support plate 240 may prevent the flexible display 230 from being damaged by a force transferred when the sliding frame 225 is moved.

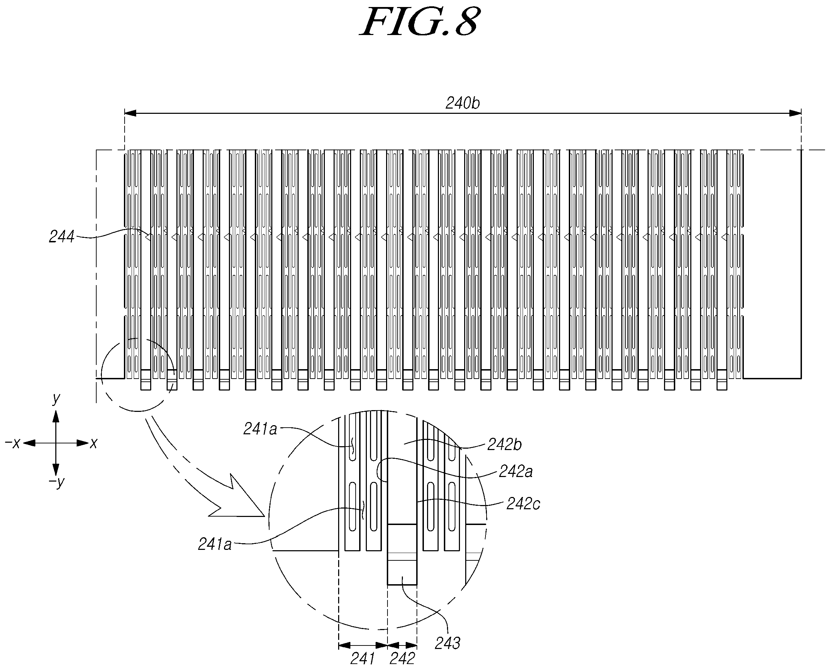

A portion (e.g., the flexible area 240b of FIG. 6) of the support plate 240 corresponding to the second area 230b of the flexible display 230 may be configured to be bendable. In the flexible area 240b, an elastic portion (e.g., the elastic portion 241 of FIG. 8) having elasticity for bending and a support portion (e.g., the support portion 242 of FIG. 8) for supporting the flexible display 230 may be alternately formed. The elastic portion 241 and the support portion 242 may be integrally formed. As illustrated, the support portion 242 is formed to protrude to one side, and this may be formed by bending a portion of the support plate 240. For example, the shape of the support portion 242 may be formed using a press die. At least a portion of the support plate 240 may be received to be movable in the first receiving portion 2101 of the first housing 210 or the second receiving portion 2201 of the second housing 220.

In the closed state, the support plate 240 may be at least partially received in the second receiving portion 2201 as illustrated but, without limitations thereto, may be at least partially received in the first receiving portion 2101. The support plate 240 may be at least partially withdrawn from the second receiving portion 2201 as illustrated to form substantially the same plane as the first housing 210 (e.g., the bracket housing 215) in the open state but, without limitations thereto, may be at least partially withdrawn from the first receiving portion 2101. In the flexible display 230 supported by at least a portion of the first housing 210 or the support plate 240, the display area visible from the outside may vary according to the sliding operation.

According to an embodiment, the support plate 240 may allow electronic components positioned inside the electronic device 200 to be substantially invisible through the flexible display 230.

According to an embodiment, the electronic device 200 may include at least one rail frame 224 disposed between the first housing 210 and the second housing 220 to induce a slide of the second housing 220. For example, the rail frame 224 may be positioned on two opposite sides of the flexible area of the support plate 240 (e.g., the flexible area 240b of FIG. 6). For example, the rail frame 224 may be integrally formed with the second housing 220 (e.g., the sliding frame 225 or the slide cover housing 226). The rail frame 224 may guide the movement of the support plate 240. For example, the rail frame 224 may guide the movement of the flexible area 240b of the support plate 240.

According to an embodiment, the rail frame 224 may include a curved surface 2241. During the insertion or withdrawal operation of the electronic device 200, a portion of the support plate 240 may be bent and moved along the rail adjacent to the curved surface 2241.

According to an embodiment, the electronic device 200 may further include a side cover (not shown) disposed to cover two opposite sides (e.g., the first lateral side 2111 and the third side 2113 of FIG. 2A) of the first housing 210.

According to an embodiment, the second housing 220 may include a sliding frame 225 or a slide cover housing 226. The sliding frame 225 may be disposed to be at least partially movable from the first housing 210 to the second receiving unit 2201 (direction ①). For example, the sliding frame 225 may be coupled to the slide cover housing 226 and may be slidably coupled to the first housing 210 (e.g., the bracket housing 215). As another example, the sliding frame 225 may be integrally formed with the slide cover housing 226. If the slide cover housing 226 includes the structure of the sliding frame 225, the sliding frame 225 may not be included as a separate component.

According to an embodiment, the electronic device 200 may include a driving module 400. The driving module 400 may be disposed in an inner space (e.g., the first receiving unit 2101 or the second receiving unit 2201). The driving module 400 may provide a driving force for moving the second housing 220 in a direction in which the second housing 220 is drawn out from the first housing 210 (direction ①) and/or in a direction in which the second housing 220 is drawn in (direction ②). The driving module 400 may be disposed in, e.g., the second housing 220 (e.g., the sliding frame 225).

According to an embodiment, the driving module 400 may include a driving motor 410, a first gear 411 (e.g., a pinion gear) mounted on the driving motor 410, and a second gear 421 (e.g., a rack gear) engaged with the first gear 411. The driving motor 410 may move together with the sliding frame 225 when the electronic device 200 is drawn in and/or out.

According to an embodiment, the driving module 400 may be disposed in the sliding frame 225 and be positioned on the same plane as the sliding frame 225. The driving module 400 may relatively reduce the thickness of the electronic device 200 to contribute to slimming down the electronic device 200, as compared to when it is disposed above or under the sliding frame 225.

According to an embodiment, in the electronic device 200, as the driving motor 410 is driven, the second gear 421 linearly moves, inducing draw-in or draw-out. For example, the second gear 421 pushes a portion of the first housing 210 or an electronic component in the first receiving unit 2101 to move the sliding frame 225 in the direction ① (e.g., -x axis direction), so that the flexible display 230 may be drawn out. Further, the second gear 421 pulls a portion of the first housing 210 or an electronic component in the first receiving unit 2101 to move the sliding frame 225 in the direction ② (e.g., -x axis direction), so that the flexible display 230 may be drawn in.

According to an embodiment, the electronic device 200 may include a supporting sheet including a touch panel or a pen recognition panel, on the rear side of the flexible display 230. The touch panel may detect the user's finger gesture input and may output a touch event value corresponding to the detected touch signal. The touch panel may be implemented of either a capacitive type or a resistive type. The capacitive type is a scheme for calculating the touch coordinates by detecting micro electricity generated in the user's body. The resistive type is a type in which includes two electrode plates embedded in the touch panel to calculate the touch coordinates by detecting a current flow generated as the upper and lower plates of the touched point contact. The pen recognition panel may detect the user's pen gesture input according to the operation of the user's touch pen (e.g., stylus pen or digitizer pen) of the user and output a pen proximity event value or pen touch event value. The pen recognition panel may be implemented, e.g., in an EMR type and may sense a touch or proximity input by a change in electromagnetic field due to the approach or touch of the touch pen.

According to an embodiment, the flexible display 230 may further include an extension 232 provided to extend from a fixing portion (e.g., the edge portion 231). For example, the extension 232 may be bent with the predetermined curvature to electrically connect the flexible printed circuit board (FPCB) and the display driver IC (DDI) positioned on the rear side of the flexible display 230. The display driving chip may be provided on the extension 232, for example.

The extension 232 may be provided by, e.g., one of a chip-on-film (COF) scheme or a chip-on-plastic (COP) scheme, but is not limited thereto.

The chip-on-film scheme may refer to a scheme in which the display driving chip is mounted on a film substrate that connects a display glass substrate and a flexible printed circuit board. When the extension 232 is provided by a chip-on-film scheme, the extension 232 may be electrically connected to the flexible printed circuit board based on anisotropic conductive film (ACF) bonding. The ACF may be an anisotropic conductive film formed by mixing fine conductive particles (e.g., nickel, carbon, or solder balls) with an adhesive resin (e.g., thermosetting resin) to allow current to flow only in one direction. If the ACF is disposed between the extension 232 and the first printed circuit board (not shown) positioned on the rear side of the flexible display 230 and is then compressed by heat and pressure, the conductive pattern (not shown) formed on the extension 232 may be electrically connected to the conductive pattern formed on the first printed circuit board. In this case, the adhesive resin may bond the extension 232 and the flexible printed circuit board. The electrical paths included in the extension 232 may electrically connect at least one layer (e.g., TFT film) and the flexible printed circuit board. For example, the electrical paths, together with the TFT, may be formed on the TFT film based on LTPS, LTPO, or a-Si.

In FIGS. 2A to 5B described above, an embodiment in which the flexible display 230 is extended or reduced in the left-right direction is illustrated or described. However, in the case of a sliding structure in which the flexible display 230 is extended or reduced in the up-down direction, a structure in which the support plate 240 moves along a rail frame (e.g., the rail frame 224 of FIG. 4) proposed above may be changed to a structure in which the flexible display 230 moves in the up-down direction and may be applied.

FIG. 6 is a view illustrating a coupling relationship between a flexible display and a support plate in an electronic device according to an embodiment.

In FIG. 6, it is provided to describe the coupling relationship between the flexible display 230 and the support plate 240, and other additional components or coupling structures of components thereof may be present. For example, the flexible display 230 and the support plate 240 may be indirectly coupled with an additional component therebetween. In FIG. 6, for convenience of description, the other components than the flexible display 230 and the support plate 240 are not shown in the illustration.

Referring to FIG. 6, a support plate 240 may be disposed on a rear side of the flexible display 230. According to an embodiment, the support plate 240 may include a fixed area 240a and a flexible area 240b. The fixed area 240a may be positioned, e.g., on the rear side of the first area 230a of the flexible display 230. The fixed area 240a may refer to, e.g., an area overlapping at least a portion of the first area 230a of the flexible display 230. The flexible area 240b may be positioned, e.g., on the rear side of the second area 230b of the flexible display 230. At least a portion of the flexible area 240b may overlap, e.g., the second area 230b of the flexible display 230. The fixed area 240a and the flexible area 240b may be integrally formed.

In the flexible area 240b, an elastic portion (e.g., the elastic portion 241 of FIG. 8) and a support portion (e.g., the support portion 242 of FIG. 8) may be disposed in the flexible area 240b as described below. The flexible area 240b may refer to, e.g., an area in which the elastic portion 241 and the support portion 242 are disposed. When the support plate 240 is disposed on the rear side of the flexible display 230, the support portion 242 may be disposed to protrude in a direction opposite to the direction toward the flexible display 230. For example, in FIG. 6, the support portion 242 may be disposed to face the -z direction.

According to an embodiment, the support plate 240 may be formed of various metallic materials and/or non-metallic materials (e.g., polymers). The support plate 240 may include, e.g., stainless steel. The support plate 240 may include, e.g., engineering plastic. The support plate 240 may be implemented integrally with the flexible display 230, for example.

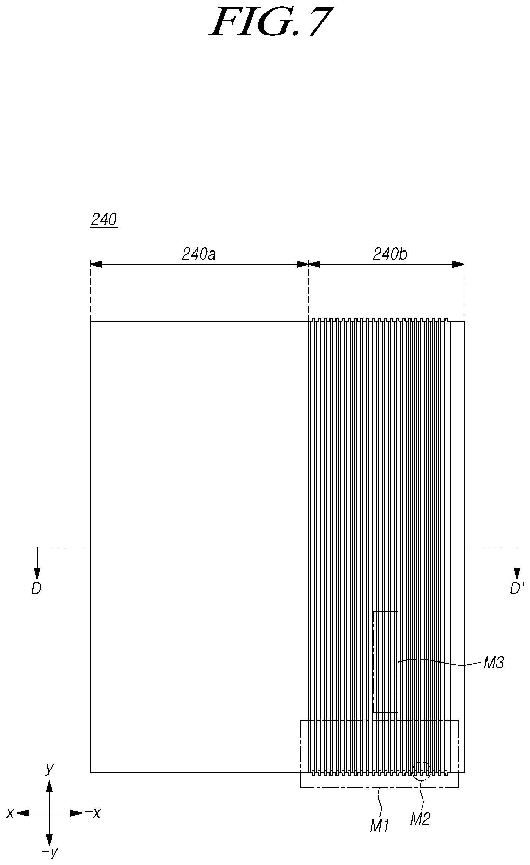

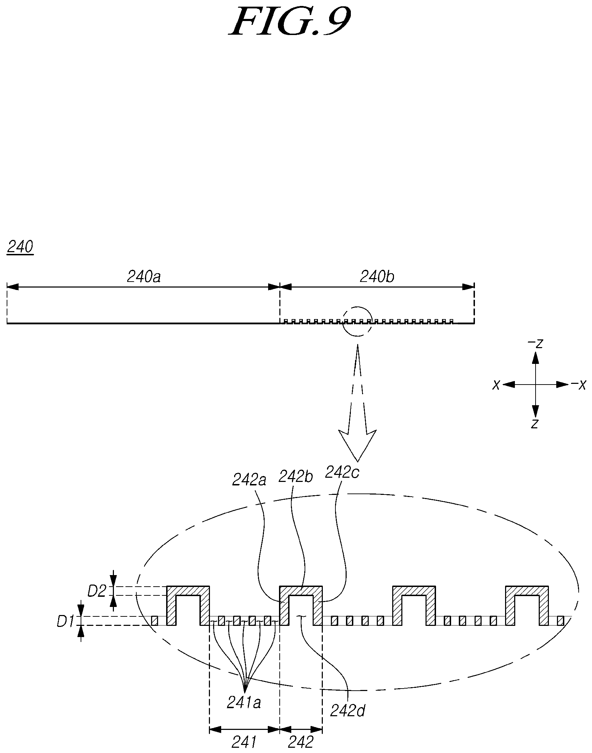

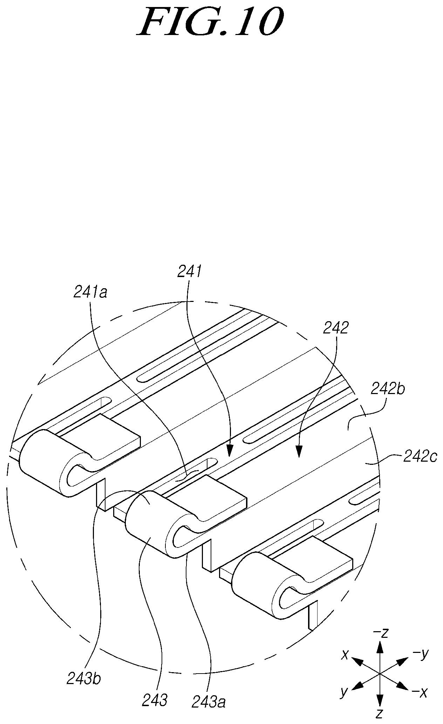

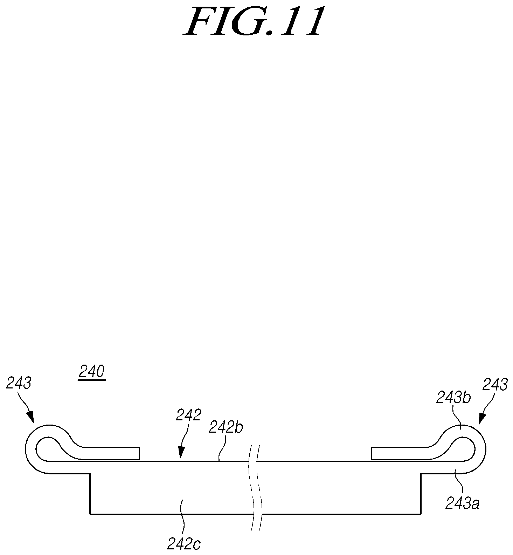

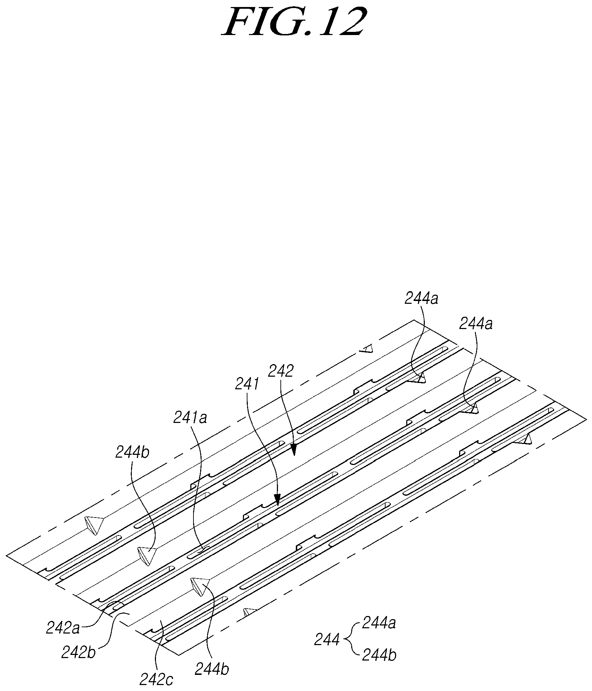

FIG. 7 is a plan view illustrating a support plate according to an embodiment. FIG. 8 is an enlarged plan view illustrating portion M1 of FIG. 7. FIG. 9 is a cross-sectional view taken along line D-D' of FIG. 7. FIG. 10 is an enlarged perspective view illustrating portion M2 of FIG. 8. FIG. 11 is a view illustrating a state in which a support portion of a support plate is viewed from a lateral side. FIG. 12 is an enlarged perspective view illustrating portion M3 of FIG. 7.

In FIGS. 7 to 12, a support plate 240, which is one component of an electronic device (e.g., the electronic device 200 of FIG. 2a), is described in detail according to an embodiment of the disclosure. The support plate 240 illustrated in FIGS. 7 to 12 may be disposed on the rear side of the flexible display (e.g., the flexible display 230 of FIG. 2A) to support the flexible display 230.

Referring to FIGS. 7 to 12, the support plate 240 may include a fixed area 240a and a flexible area 240b. The fixed area 240a may be an area that is not bent. The fixed area 240a may be positioned on the rear side of a portion of the flexible display 230 that is not bent. The flexible area 240b may be a bendable area. The flexible area 240b may be guided and moved by the rail frame (e.g., the rail frame 224 of FIG. 4) during the insertion or withdrawal operation of the electronic device 200. For example, the flexible area 240b may be bent in a portion adjacent to the curved surface (e.g., the curved surface 2241 of FIG. 4) of the rail frame 224.

Referring to FIG. 8, the support plate 240 may include a plurality of elastic portions 241 and a plurality of support portions 242. The elastic portion 241 and the support portion 242 may be alternately disposed in the flexible area 240b. The elastic portion 241 and the support portion 242 may be alternately disposed along the length direction of the support plate 240, for example. Here, the length direction of the support plate 240 may refer to the x-axis direction. The elastic portion 241 or the support portion 242 may be formed to be elongated in a direction perpendicular to the length direction of the support plate 240, for example.

According to an embodiment, the elastic portion 241 may include a plurality of through holes 241a. Bending performance may be enhanced by forming a plurality of through holes 241a in the elastic portion 241. The through hole 241a may have, e.g., an oval shape elongated in a direction perpendicular to the length direction of the support plate 240 as illustrated. However, the disclosure is not limited thereto, and may have a rectangular shape elongated in a direction perpendicular to the length direction of the support plate 240. Here, the direction perpendicular to the length direction of the support plate 240 may be the length direction or the y-axis direction of the elastic portion 241. The plurality of through holes 241a may be formed in the elastic portion 241 according to a predetermined pattern. For example, a plurality of through holes 241a may be disposed in a lattice pattern.

According to an example, the support portion 242 may be formed to integrally extend from the elastic portion 241 to protrude. The support portion 242 may be formed by presswork in a manufacturing step. No through hole may be formed in the support portion 242.

The support plate 240 according to an embodiment of the disclosure is manufactured so that the elastic portion 241 and the support portion 242 are integrally formed, thereby omitting a process of attaching a separate supporting member to the support plate.

When a separate supporting member is attached to the support plate, the separate supporting member may be separated from the support plate by repeated insertion and withdrawal operations of the electronic device 200, thereby causing a product defect. The support plate 240 according to an embodiment of the disclosure is manufactured so that the elastic portion 241 and the support portion 242 are integrally formed, thereby preventing the support portion 242 from being separated from the support plate 240 despite repeated insertion and withdrawal operations of the electronic device 200.

Further, according to an embodiment of the disclosure, the support plate 240 may enable the shape of the support portion 242 to be formed using a press die in a relatively straightforward manner, thereby simplifying the manufacturing process.

According to an example, the support plate 240 may be formed using press processing. The plurality of elastic portions 241 and the plurality of support portions 242 positioned in the flexible area 240b of the support plate 240 may be formed through presswork. For example, the plurality of through holes 241a formed in the elastic portion 241 may be formed through a piercing process of the presswork. The process of forming the through hole 241a of the elastic portion 241 and the process of forming the bending shape of the support portion 242 may be implemented as individual dies but, without limitations thereto, may be implemented as one progressive die.

Referring to FIG. 9, the support portion 242 may include a first lateral side 242a, an upper side 242b, and a second lateral side 242c. The first lateral side 242a may extend from the elastic portion 241 adjacent to one side of the support portion 242 to form a predetermined angle with the plane of the elastic portion 241. For example, the first lateral side 242a may extend to be substantially perpendicular to the plane of the elastic portion 241. The second lateral side 242c may extend from the elastic portion 241 adjacent to the other side of the support portion 242 to form a predetermined angle with the plane of the elastic portion 241. For example, the second lateral side 242c may extend to be substantially perpendicular to the plane of the elastic portion 241. The first lateral side 242a and the second lateral side 242c may extend, e.g., in directions parallel to each other, but the disclosure is not limited thereto. The upper side 242b may be a plane connecting the upper ends of the first lateral side 242a and the second lateral side 242c. The upper side 242b may extend in a horizontal direction. The upper side 242b may extend, e.g., from the first lateral side 242a and extend parallel to one side of the fixed area 240a. The upper side 242b may be, e.g., a plane perpendicular to the first lateral side 242a or the second lateral side 242c. The upper side 242b may be, e.g., a side parallel to the plane of the elastic portion 241.

According to an embodiment, an inner space 242d may be defined by the first lateral side 242a, the upper side 242b, and the second lateral side 242c of the support portion 242. A specific material or configuration may fill or be disposed in the inner space 242d. According to an example, the support plate 240 may include at least one of a cushioning material or a heat dissipation material filling the inner space 242d to alleviate an external impact. When the cushioning material fills the support portion 242, the rigidity of the support portion 242 may be enhanced. The cushioning material may include, e.g., an elastic material such as rubber or silicone, and may be formed in the form of a foam or cushion. When the heat dissipation material fills the support portion 242, the heat generated in the internal circuit of the electronic device 200 may be prevented from being transferred to the flexible display 230. The heat dissipation material may be, e.g., a polymer material, a metal, ceramic, carbon, or a combination thereof, but the disclosure is not limited thereto. The limited space inside the electronic device 200 may be efficiently utilized by filling the inner space 242d provided inside the support portion 242 with the cushioning material or the heat dissipation material.

According to an example, a portion of the plurality of inner spaces 242d formed in the support plate 240 may be filled with the cushioning material, and another portion thereof may be filled with the heat dissipation material.

According to an example, the thickness of each side of the support portion 242 may be substantially the same. For example, the first lateral side 242a, the upper side 242b, and the second lateral side 242c of the support portion 242 may have substantially the same thickness.

For example, the thickness of at least one of the first lateral side 242a, the upper side 242b, and the second lateral side 242c of the support portion 242 may be substantially the same as the thickness D1 of the elastic portion 241. For example, the thickness D2 of the upper side 242b of the support portion 242 may be substantially the same as the thickness D1 of the elastic portion 241. Since the support plate (240) according to an embodiment of the disclosure is generally manufactured by presswork, the production process may be simplified by manufacturing the entire portion with the same thickness.

Referring to FIG. 10, the support plate 240 may include a guide portion 243. The guide portion 243 may extend from the support portion 242 and may be bent so that at least a portion thereof has a curvature. The guide portion 243 may be bent toward a direction in which the support portion 242 protrudes, e.g., as illustrated. However, the disclosure is not limited thereto, and the guide portion 243 may be bent toward a lower direction of the support portion 242. Here, the direction in which the support portion 242 protrudes may refer to the -z direction.

According to an example, the guide portion 243 may be formed to extend from one end of the support portion 242 that does not contact the elastic portion 241. The guide portion 243 may be formed to extend from the upper side 242b of the support portion 242, for example. The guide portion 243 may be formed to extend from an end portion of the support portion 242 in the length direction, for example. Here, the length direction of the support portion 242 may refer to the y-axis direction. The guide portion 243 and the elastic portion 241 may be integrally formed, for example.

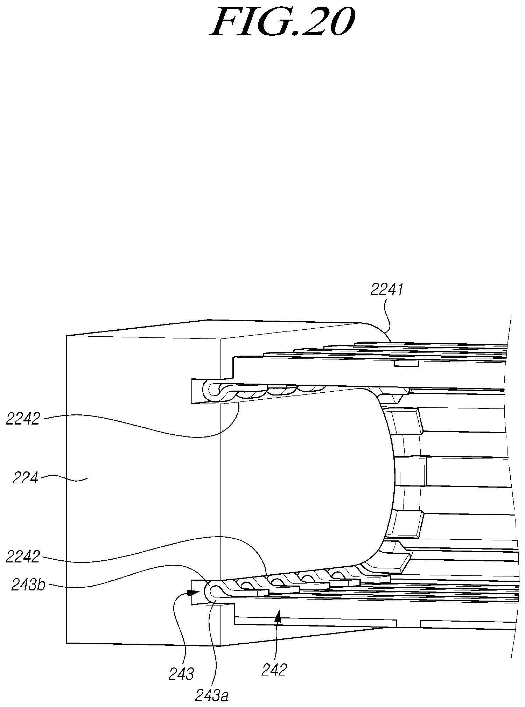

According to an embodiment, one guide portion 243 may be provided at each of two opposite lengthwise ends of one support portion 242. The guide portion 243 may be a portion inserted into a guide rail (e.g., the guide rail 2242 of FIG. 20) provided on the rail frame (e.g., the rail frame 224 of FIG. 4). The guide portion 243 may be inserted into the guide rail 2242 of the rail frame 224 and may slide along the path of the guide rail 2242. As the guide portion 243 moves along the path of the guide rail 2242, the flexible area 240b of the support plate 240 may be moved. The shape of the guide portion 243 may be formed by bending by a hemming method.

Referring to FIG. 11, the guide portion 243 may include a first portion 243a extending to form the same plane as the upper side 242b of the support portion 242, and a second portion 243b extending from the first portion 243a and being bent so that at least a portion thereof has a curvature. The first portion 243a may be formed of a plane without curvature. The first portion 243a may be, e.g., a portion positioned on the same plane as the upper side 242b of the support portion 242. The second portion 243b may be bent so that a portion of the second portion 243b contacts an upper side of the upper side 242b of the support portion 242. The second portion 243b may be formed by, e.g., a hemming method. The rigidity of the guide portion 243 may be enhanced as the first portion 243a comes in face-to-face contact with one surface of the guide rail (e.g., the guide rail 2242 of FIG. 20) to be described below. When the guide portion 243 is inserted into the guide rail 2242, as the area in contact with the guide rail 2242 is, the supporting force of the guide portion 243 may be enhanced. By increasing the contact area between the guide portion 243 and the guide rail 2242, the guide portion 243 may stably slide in the guide rail 2242.

According to an example, the guide portion 243 may be bent to have a rounded shape as a whole. For example, the overall rounded shape may be formed by the first portion 243a and the second portion 243b. At least a portion of the guide portion 243 may be formed of a plane without curvature. The guide portion 243 may be formed by manufacturing a long plane extending from the upper side 242b of the support portion 242 in the length direction of the support portion 242 using a press die and then performing hemming processing to bend the same.

Referring to FIG. 12, the support portion 242 may include at least one recessed bead 244. By forming the bead 244 on the support portion 242, the rigidity of the support portion 242 may be enhanced. According to an embodiment, the bead 244 may include at least one of a first bead 244a of a second bead 244b. The first bead 244a may be positioned, e.g., at the corner where the first lateral side 242a and the upper side 242b contact each other. The second bead 244b may be positioned, e.g., at the corner where the second lateral side 242c and the upper side 242b contact each other. The plurality of beads 244 may be disposed to be spaced apart from each other at a predetermined interval in the length direction of the support portion 242. For example, the first bead 244a and the second bead 244b may be alternately disposed along the length direction of the support portion 242 at predetermined intervals, but the disclosure is not limited thereto.

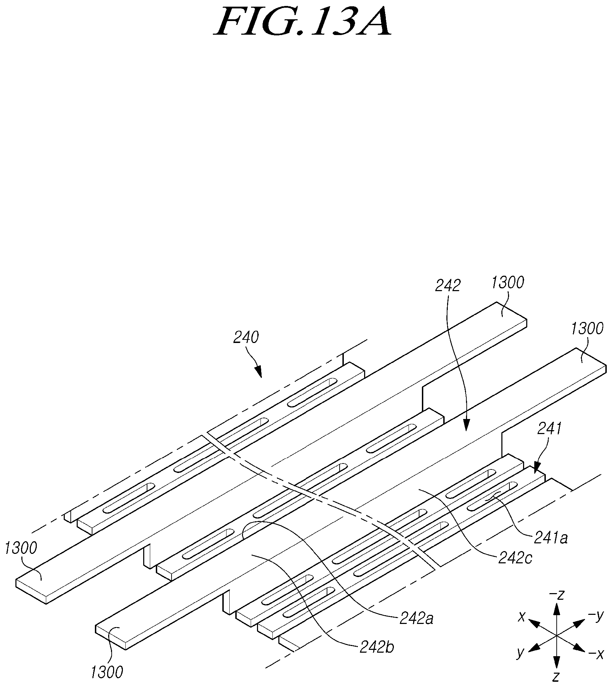

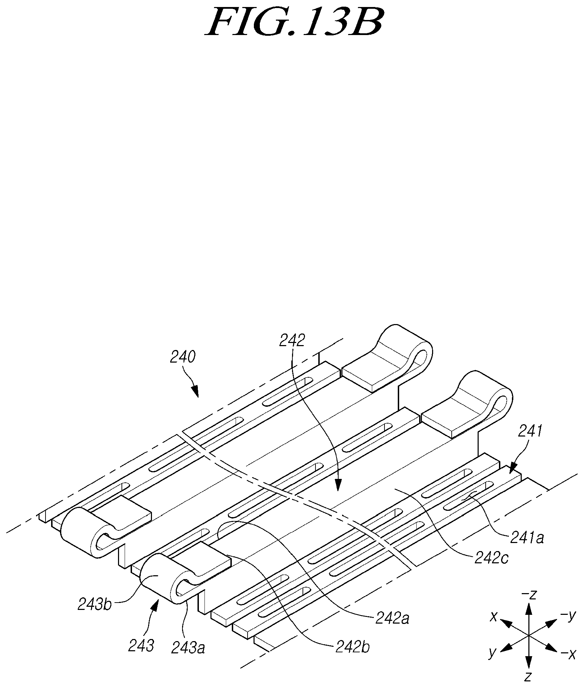

FIGS. 13A and 13B are views illustrating a process of forming a guide portion extending from a support portion according to an embodiment.

The support plate 240 manufactured by the process illustrated in FIGS. 13A and 13B may be substantially the same as the support plate 240 of FIG. 7. Thus, a duplicate description is not repeated below.

FIG. 13A illustrates the support plate 240 in a state before the guide portion 243 is bent by bending. According to an embodiment, a sheet member 1300 extending from the support portion 242 may be provided by a press die as illustrated. The sheet member 1300 may extend to form the same plane as the upper side 242b of the support portion 242, but the disclosure is not limited thereto. The sheet member 1300 may be extended to have the same width as that of the upper side 242b of the support portion 242, but the disclosure is not limited thereto. Here, the width of the upper side 242b of the support portion 242 may refer to the length of the support portion 242 in the x-axis direction. The support portion 242 may be integrally formed with the sheet member 1300, for example.

Referring to FIG. 13B, the sheet member 1300 may be bent to form a guide portion 243. The sheet member 1300 may be bent by, e.g., a hemming method, but the disclosure is not limited thereto. In order to position a portion of the portion extending from the upper side 242b of the support portion 242 on the same plane as the upper side 242b of the support portion 242, the corresponding portion may not be bent. The sheet member 1300 extending from one end of the upper side 242b of the support portion 242 may be bent so that at least a portion thereof has a curvature. The sheet member 1300 may be bent so that an end thereof contacts the upper side 242b of the support portion 242. The end of the sheet member 1300 in contact with the upper side 242b of the support portion 242 may be fixedly coupled to the upper side 242b of the support portion 242 by a separate adhesive member or welding.

The support plate 240 according to an embodiment may form the shape of the guide portion 243 only by a bending process such as a hemming process. Accordingly, the manufacturing process of the support plate 240 may be simplified, thereby increasing manufacturing efficiency.

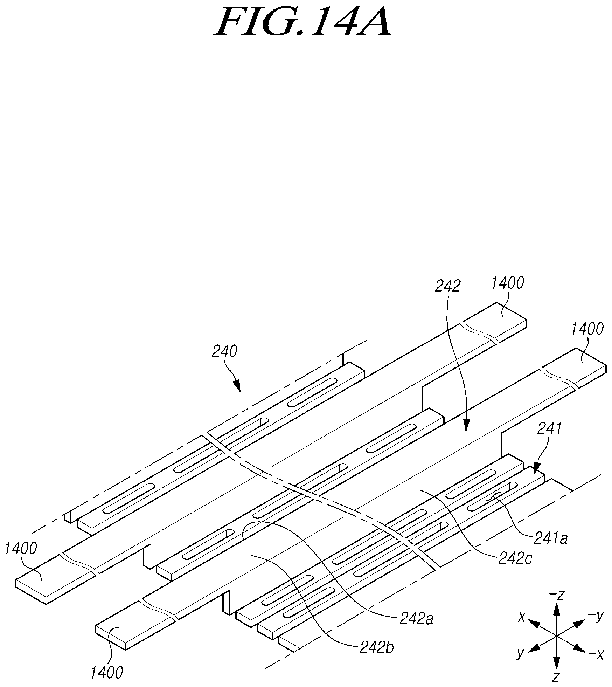

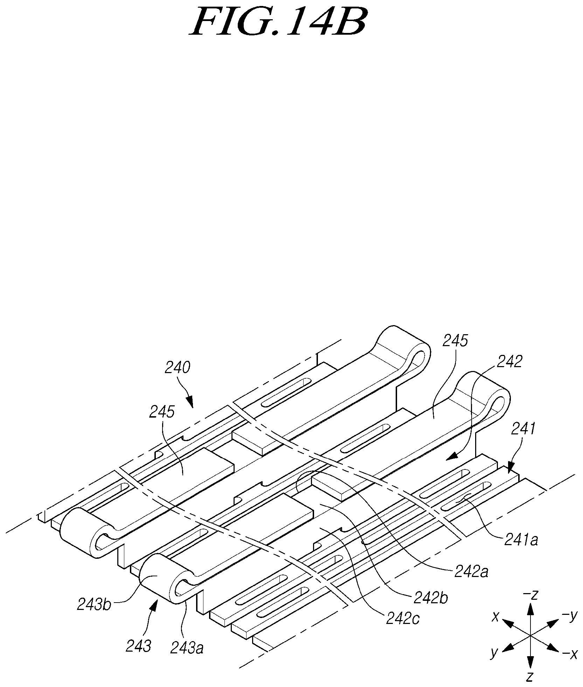

FIGS. 14A and 14B are views illustrating a process of forming a guide portion extending from a support portion and a reinforcement portion disposed on an upper side of the support portion according to an embodiment.

The support plate 240 manufactured by the process illustrated in FIGS. 14A and 14B may be disposed on the rear side of the flexible display 230 to support the flexible display 230 of the electronic device 200 of FIG. 2.

According to an embodiment, the support plate 240 may further include a reinforcement portion (e.g., the reinforcement portion 245 of FIG. 14B). The reinforcement portion 245 may be provided on the support portion 242 to reinforce the rigidity of the support portion 242. The reinforcement portion 245 may be, e.g., disposed to cover a portion of the upper side 242b of the support portion 242. The reinforcement portion 245 may contact, e.g., the upper side242b of the support portion 242. The reinforcement portion 245 may be fixedly coupled to the upper side 242b of the support portion 242, e.g., by an adhesive member or welding.

According to an example, the reinforcement portion 245 may be integrally formed with the support plate 240. The reinforcement portion 245 may be formed to integrally extend from the guide portion 243. For example, the reinforcement portion 245 may be formed to integrally extend from the second portion 243b of the guide portion 243. However, the disclosure is not limited thereto, and the reinforcement portion 245 and the support plate 240 may be separately manufactured and coupled to each other. Hereinafter, a process of forming the reinforcement portion 245 is described.

FIG. 14A illustrates the support plate 240 in a state before the guide portion 243 is bent by bending. According to an embodiment, a sheet member 1400 integrally extending from the support portion 242 may be provided by a press die as illustrated. The sheet member 1400 may extend to form the same plane as the upper side 242b of the support portion 242, but the disclosure is not limited thereto. The sheet member 1400 may be extended to have the same width as that of the upper side 242b of the support portion 242, but the disclosure is not limited thereto. The length of the sheet member 1400 illustrated in FIG. 14A may be longer than the length of the sheet member 1300 illustrated in FIG. 13A. For example, a portion corresponding to the difference between the length of the sheet member 1400 illustrated in FIG. 14A and the length of the sheet member 1300 illustrated in FIG. 13A may be disposed to contact the upper side 242b of the support portion 242 as the reinforcement portion 245.

Referring to FIG. 14B, the sheet member 1400 may be bent to form the guide portion 243 and the reinforcement portion 245. Since the guide portion 243 and the reinforcement portion 245 are formed from a single sheet member 1400, the guide portion 243 and the reinforcement portion 245 may be integrally formed.

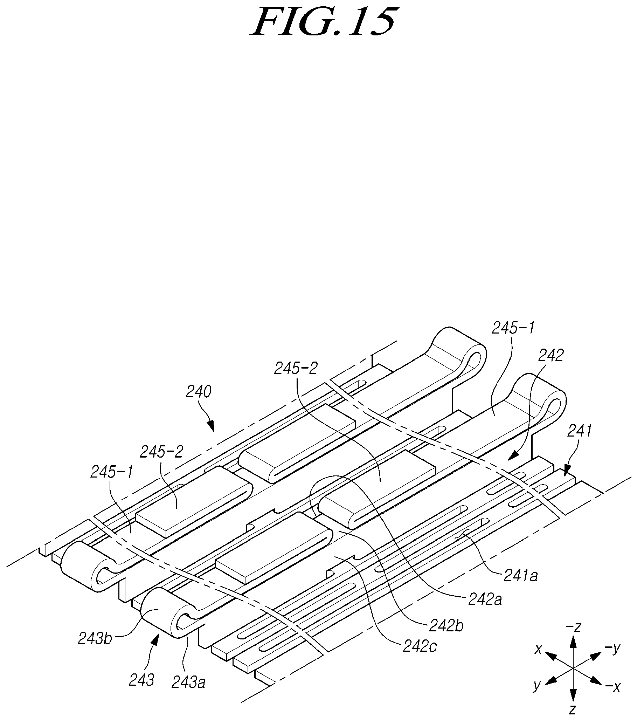

FIG. 15 is a view illustrating a portion of a support plate provided with a reinforcement portion reinforced in multiple layers according to an embodiment.

The support plate 240 illustrated in FIG. 15 may be disposed on the rear side of the flexible display 230 to support the flexible display 230 of the electronic device 200 of FIG. 2. In the flexible area 240b of the support plate 240, a relatively strong stress may be applied to the central portion during bending. In the support plate 240 illustrated in FIG. 15, the rigidity of the support portion 242 may be enhanced by providing multiple layers of the reinforcement portion 245-1 and 245-2 at the center portion.

According to an embodiment, the support plate 240 may include a first reinforcement portion 245-1 and a second reinforcement portion 245-2. The first reinforcement portion 245-1 may be formed to integrally extend from the guide portion 243. The second reinforcement portion 245-2 may be formed to integrally extend from the first reinforcement portion 245-1 and may be stacked on the first reinforcement portion 245-1. The second reinforcement portion 245-2 may be bent from an end of the first reinforcement portion 245-1 and stacked on the first reinforcement portion 245-1. However, the disclosure is not limited thereto, and the second reinforcement portion 245-2 may be separately provided and coupled onto the first reinforcement portion 245-1. When the second reinforcement portion 245-2 is separately provided, the second reinforcement portion 245-2 may be coupled to the first reinforcement portion 245-1 by an adhesive member or welding.

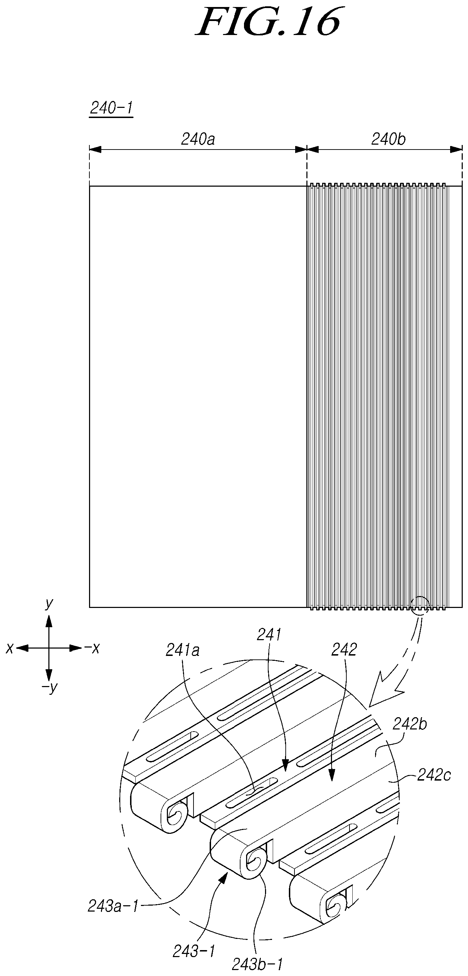

FIG. 16 is a view illustrating a portion of a support plate including a guide portion having a rolled shape according to an embodiment.

The support plate 240-1 illustrated in FIG. 16 may be disposed on the rear side of the flexible display 230 to support the flexible display 230 of the electronic device 200 of FIG. 2.

In FIG. 16, the same reference numerals are applied to substantially the same component as the support plate 240 described with reference to FIGS. 7 to 12. The following description focuses primarily on a configuration different from that of the support plate 240 of FIGS. 7 to 12.

Referring to FIG. 16, the support plate 240-1 may include the guide portion 243-1, which provides an enhanced supporting force. The guide portion 243-1 may extend from the support portion 242 and may be bent so that at least a portion thereof has a curvature. The guide portion 243-1 may be formed to extend from the upper side 242b of the support portion 242, for example. The support portion 242 and the guide portion 243-1 may be integrally formed, for example.

According to an embodiment, the guide unit 243-1 may include a first first portion 243a-1 and a first second portion 243b-1. The first first portion 243a-1 may be a portion extending to form the same plane as the upper side 242b of the support portion 242. The 2-1 portion 243b-1 may be a portion that extends from the 1-1 portion 243a-1 and is bent so that at least a portion thereof has a curvature and is rolled inward. The first second portion 243b-1 may be bent so that an end thereof is rolled inward. The first second portion 243b-1 may be bent to have a spiral shape or a vortex shape, e.g., but the disclosure is not limited thereto. The first second portion 243b-1 may be formed by, e.g., a hemming method. The first first portion 243a-1 may enhance the rigidity of the guide portion 243-1 by making face-to-face contact with one surface of a guide rail (e.g., the guide rail 2242 of FIG. 20) to be described below. By increasing the contact area between the guide portion 243-1 and the guide rail 2242, the guide portion 243-1 may stably slide in the guide rail 2242. Further, the supporting force of the guide portion 243-1 may be enhanced by the spiral shape or the vortex shape of the first second portion 243b-1.

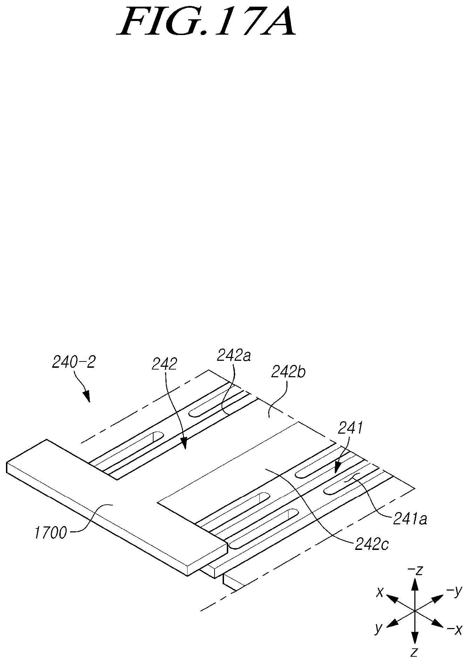

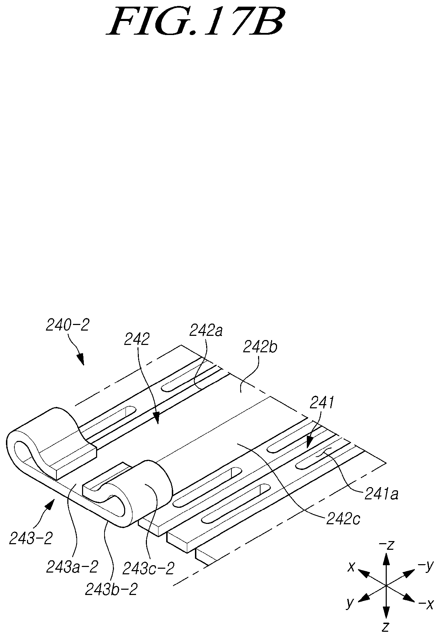

FIGS. 17A and 17B are views illustrating a portion of a support plate having a shape of a guide portion according to another embodiment.

The support plate 240-2 manufactured by the process illustrated in FIGS. 17A and 17B may be disposed on the rear side of the flexible display 230 to support the flexible display 230 of the electronic device 200 of FIG. 2.

In FIGS. 17A and 17B, the same reference numerals are applied to substantially the same component as the support plate 240 described in FIGS. 7 to 12. The following description focuses primarily on a configuration different from that of the support plate 240 of FIGS. 7 to 12.

FIG. 17A illustrates a shape formed through a press die before forming the guide portion 243-2 of the support plate 240-2 according to an embodiment. A sheet member 1700 extending from an upper side of the support portion 242 may be provided through a press die. The sheet member 1700 may be positioned on the same plane as the upper side 242b of the support portion 242. The sheet member 1700 may be extended to have a width larger than that of the support portion 242.

Referring to FIG. 17B, the support plate 240-2 may include the guide portion 243-2 having an enhanced supporting force. The guide portion 243-2 of the support plate 240-2 according to an embodiment may be formed by bending two opposite sides of the sheet member 1700.

According to an embodiment, the guide portion 243-2 may include a second first portion 243a-2 and sub guide portion 243b-2, 243c-2. The second first portion 243a-2 may extend from one end of the upper side 242b of the support portion 242 to form the same plane. The sub guide portion 243b-2, 243c-2 may extend in a direction perpendicular to the length direction of the support portion 242 from the second first portion 243a-2 and may be bent so that at least a portion thereof has a curvature.

According to an embodiment, the sub guide portion 243b-2, 243c-2 may include at least one of the first sub guide portion 243b-2, 243c-2 or the second sub guide portion 243b-2, 243c-2. The first sub guide portion 243b-2, 243c-2 and the second sub guide portion 243b-2, 243c-2 may be formed to extend in different directions with respect to the second first portion 243a-2. The guide portion 243-2 according to an embodiment may enhance a supporting force by providing the two sub guide portion 243b-2, 243c-2.

According to an embodiment, the sub guide portion 243b-2, 243c-2 may include a second second portion 243b-2 and a 3-2th portion 243c-2. The second second portion 243b-2 may extend from the second first portion 243a-2 in a direction perpendicular to the length direction of the support portion 242 to form the same plane as the second first portion 243a-2. Here, the direction perpendicular to the length direction of the support portion 242 may refer to the same direction as the length direction of the support plate 240-2. The 3-2th portion 243c-2 may extend from the second second portion 243b-2 and have a curvature and may be bent to contact an upper side of the second first portion 243a-2.

According to an example, when the guide portion 243-2 is inserted into a guide rail (e.g., the guide rail 2242 of FIG. 20), the second first portion 243a-2 and the second second portion 243b-2 may come in surface contact with one surface of the guide rail 2242 to enhance the rigidity of the guide portion 243-2.

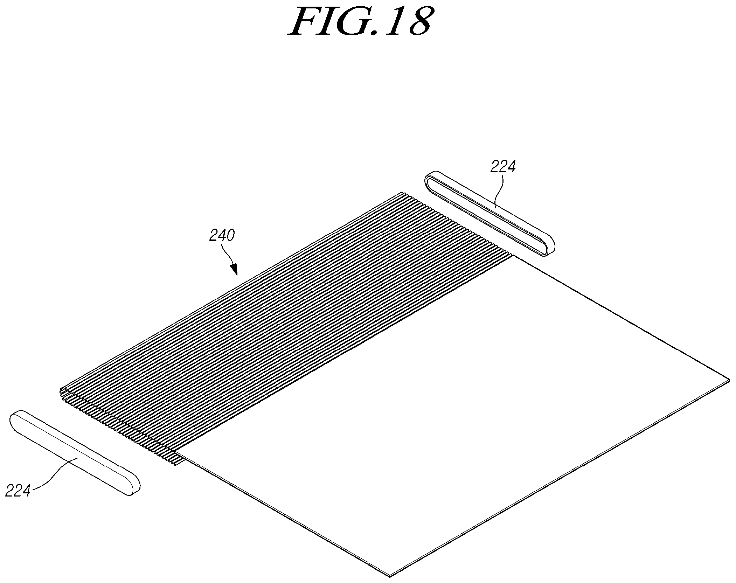

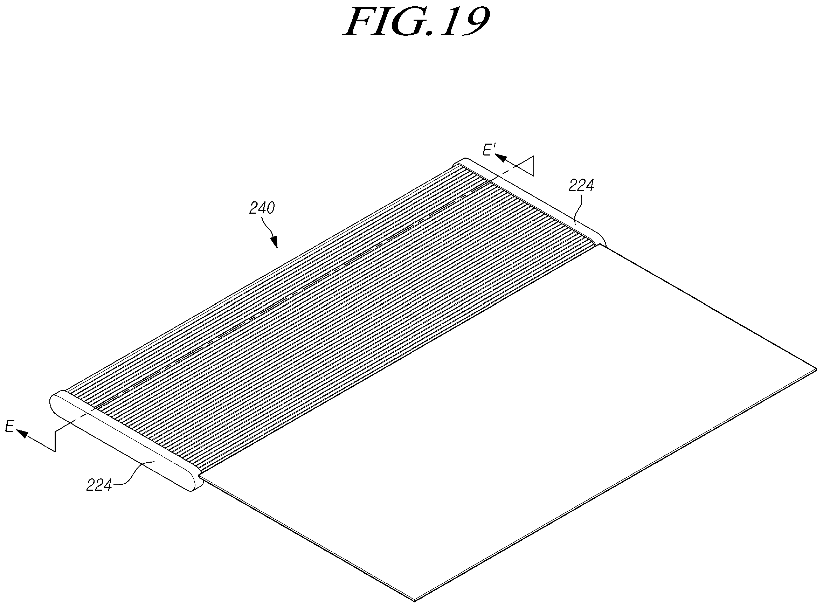

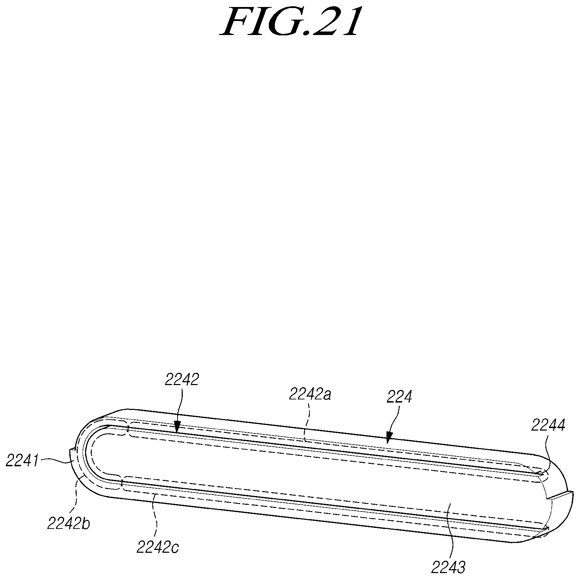

FIG. 18 is an exploded perspective view illustrating a support plate and a rail frame according to an embodiment. FIG. 19 is a perspective view illustrating a state in which a support plate and a rail frame are coupled to each other according to an embodiment. FIG. 20 is a cross-sectional view taken along line E-E' of FIG. 19. FIG. 21 is a view illustrating a guide rail of a rail frame according to an embodiment.

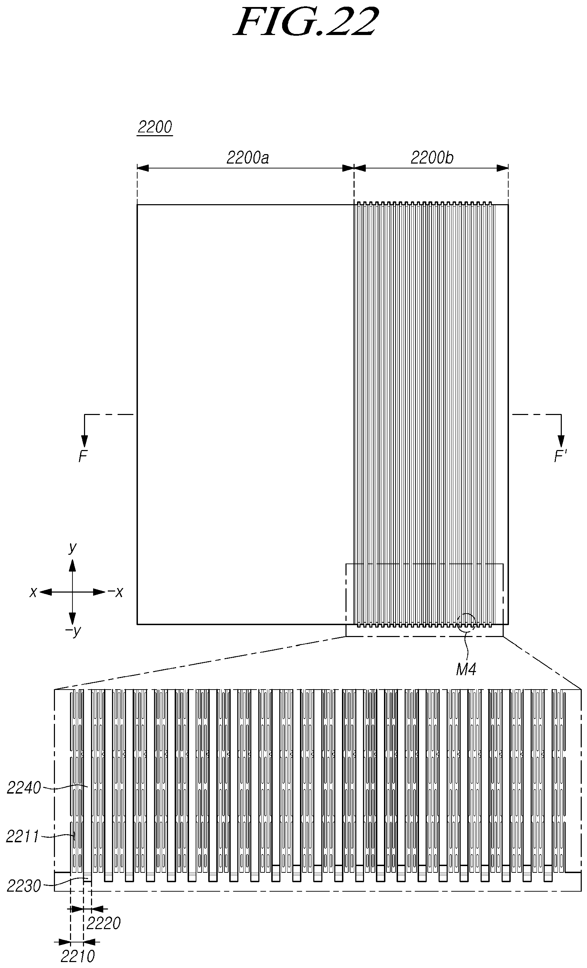

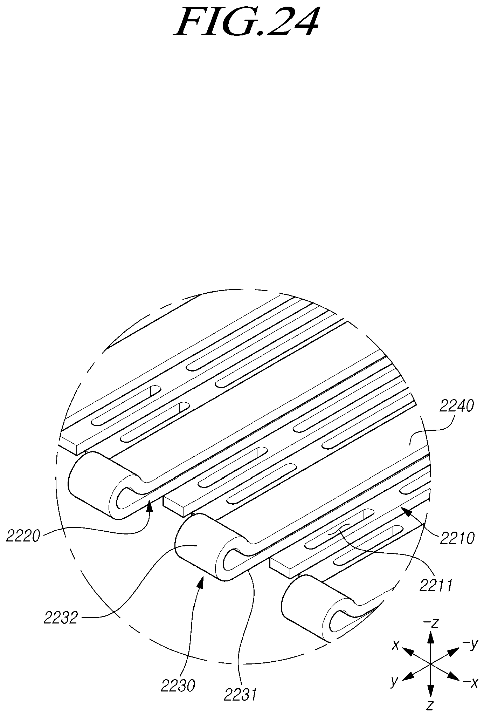

The rail frame 224 coupled to the support plate 240 of FIG. 7 is exemplarily illustrated in FIGS. 18 to 21, but the following description may be equally applied to the support plate 240 according to various embodiments illustrated in FIGS. 14A to 17B and the support plate 240 according to an embodiment illustrated in FIGS. 22 and 24 to be described below.

Referring to FIGS. 18 to 21, the rail frame 224 may include a guide rail 2242 for guiding the movement of the flexible area 240b of the support plate 240. For example, the guide rail 2242 may guide the movement of the guide portion 243 of the support plate 240.

According to an embodiment, the guide rail 2242 may include at least one of a first rail 2242a, a second rail 2242b, and a third rail 2242c.

According to an example, the first rail 2242a may be positioned at the upper portion of the inner surface 2243 of the rail frame 224. The first rail 2242a may have, e.g., a straight path. An opening 2244 for inserting the guide portion 243 of the support plate 240 may be provided at one end of the first rail 2242a. The other end of the first rail 2242a may be connected to the second rail 2242b. When the guide portion 243 is positioned on the first rail 2242a, the first portion 243a of the guide portion 243 and one surface of the guide rail 2242 may come in surface contact with each other. A flexible display (e.g., the flexible display 230 of FIG. 2) positioned at a portion corresponding to the first rail 2242a may be visible from the outside.

According to an example, the second rail 2242b may be positioned at the side portion of the inner surface 2243 of the rail frame 224. The second rail 2242b may be positioned, e.g., adjacent to the curved surface of the rail frame 224. The second rail 2242b may have, e.g., a curved path. One end of the second rail 2242b may be connected to the other end of the first rail 2242a. The other end of the second rail 2242b may be connected to one end of the third rail 2242c. In other words, the second rail 2242b may be the rail connecting the first rail 2242a and the third rail 2242c. The support portion 242 connected to the guide portion 243 passing through the second rail 2242b may be stressed by a repulsive force directed outward in the radial direction of the second rail 2242b.

According to an example, the third rail 2242c may be positioned at the lower portion of the inner surface 2243 of the rail frame 224. The third rail 2242c may have, e.g., a straight path. One end of the third rail 2242c may be connected to the other end of the second rail 2242b. When the guide portion 243 is positioned on the third rail 2242c, the first portion 243a of the guide portion 243 and one surface of the guide rail 2242 may come in surface contact with each other. A portion of the flexible display 230 positioned at a portion corresponding to the third rail 2242c may not be visible from the outside.

For example, the second width W2 of the second rail 2242b may be larger than the first width W1 of the first rail 2242a or the third width W3 of the third rail 2242c. The second rail 2242b is a curved path and, when the guide portion 243 is positioned on the second rail 2242b, the first portion 243a of the guide portion 243 and the guide rail 2242 may move without surface contact. In this case, the second width W2 may be larger than the first width W1 or the third width W3 because a larger width should be formed in order for the guide portion 243 to pass the curved path. The sizes of the first width W1 and the third width W3 may be substantially the same, but the disclosure is not limited thereto.

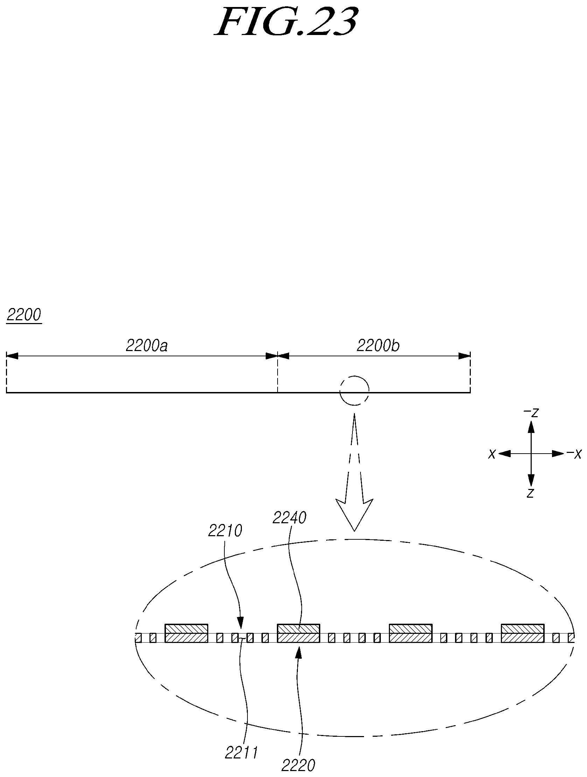

FIG. 22 is a plan view illustrating a support plate according to another embodiment. FIG. 23 is a cross-sectional view taken along line F-F' of FIG. 22. FIG. 24 is an enlarged perspective view illustrating portion M4 of FIG. 22.

The support plate 2200 illustrated in FIGS. 22 to 24 may be disposed on the rear side of the flexible display 230 to support the flexible display 230 of the electronic device 200 of FIG. 2.

Referring to FIGS. 22 to 24, the support plate 2200 may include a fixed area 2200a and a flexible area 2200b. The fixed area 2200a may be an area that is not bent. The fixed area 2200a may be positioned on the rear side of a portion of the flexible display 230 that is not bent. The flexible area 2200b may be a bendable area. The flexible area 2200b may be moved along the rail frame (e.g., the rail frame 224 of FIG. 4) during the insertion or withdrawal operation of the electronic device 200. For example, the flexible area 2200b may be bent in a portion adjacent to the curved surface of the rail frame 224 (e.g., the curved surface 2241 of FIG. 4).

Referring to FIG. 22, the support plate 2200 may include a plurality of elastic portions 2210 and a plurality of support portions 2220. The elastic portion 2210 and the support portion 2220 may be alternately disposed in the flexible area 2200b. The elastic portion 2210 and the support portion 2220 may be alternately disposed along the length direction of the support plate 2200, for example. Here, the length direction of the support plate 2200 may refer to the x-axis direction. For example, the elastic portion 2210 or the support portion 2220 may be formed on the same plane of the support plate 2200 to be elongated in a direction perpendicular to the length direction of the support plate 2200. The elastic portion 2210 and the support portion 2220 may have substantially the same thickness.

According to an embodiment, the elastic portion 2210 may include a plurality of through holes 2211. Bending performance may be enhanced by forming the plurality of through holes 2211 in the elastic portion 2210. The through hole 2211 may have an oval shape elongated in a direction perpendicular to the length direction of the support plate 2200 as illustrated. However, the disclosure is not limited thereto, and may have a rectangular shape elongated in a direction perpendicular to the length direction of the support plate 2200. Here, the direction perpendicular to the length direction of the support plate 2200 may be the length direction or the y-axis direction of the elastic portion 2210. A plurality of through holes 2211 may be formed in the elastic portion 2210 according to a predetermined pattern. For example, the plurality of through holes 2211 may be disposed in a lattice pattern.

According to an example, the support portion 2220 may be a portion in which no through hole is formed. The support portion 2220 may be formed to be positioned on the same plane as the elastic portion 2210. A reinforcement portion 2240 to be described below may be provided on one surface of the support portion 2220 to enhance rigidity.

Referring to FIG. 24, the support plate 2200 may include a guide portion 2230. The guide portion 2230 may extend from the support portion 2220 and may be bent so that at least a portion thereof has a curvature. The guide portion 2230 may be bent in the upper direction of the support portion 2220, e.g., as illustrated. However, the disclosure is not limited thereto, and the guide portion 2230 may be bent toward a lower direction of the support portion 2220. Here, the upper direction of the support portion 2220 may refer to the -z direction.

According to an example, the guide portion 2230 may be formed to extend from one end of the support portion 2220 that does not contact the elastic portion 2210. For example, it may be formed to extend from an end portion of the support portion 2220 in the length direction. Here, the length direction of the support portion 2220 may refer to the y-axis direction. The guide portion 2230 and the elastic portion 2210 may be integrally formed, for example.

According to an embodiment, one guide portion 2230 may be provided at each of two opposite lengthwise ends of one support portion 2220. The guide portion 2230 may be a portion inserted into a guide rail (e.g., the guide rail 2242 of FIG. 20) provided on the rail frame (e.g., the rail frame 224 of FIG. 4). The guide portion 2230 may be inserted into the guide rail 2242 of the rail frame 224 and may slide along the path of the guide rail 2242. As the guide portion 2230 moves along the path of the guide rail 2242, the flexible area 2200b of the support plate 2200 may be moved. The shape of the guide portion 2230 may be formed by bending by a hemming method.

Referring to FIG. 24, the guide portion 2230 may include a first portion 2231 extending to form the same plane as the support portion 2220 and a second portion 2232 extending from the first portion 2231 and being bent so that at least a portion thereof has a curvature. The first portion 2231 may be formed of a plane without curvature. The second portion 2232 may be formed by, e.g., a hemming method. The rigidity of the guide portion 2230 may be enhanced as the first portion 2231 comes in face-to-face contact with one surface of the guide rail (e.g., the guide rail 2242 of FIG. 20) to be described below. When the guide portion 2230 is inserted into the guide rail 2242, as the area in contact with the guide rail 2242 is, the supporting force of the guide portion 2230 may be enhanced. By increasing the contact area between the guide portion 2230 and the guide rail 2242, the guide portion 2230 may stably slide in the guide rail 2242.

According to an example, the guide portion 2230 may be bent to have a rounded shape as a whole. For example, the overall rounded shape may be formed by the first portion 2231 the second portion 2232. At least a portion of the guide portion 2230 may be formed of a plane without curvature.

The shape of the guide portion 2230 illustrated in FIG. 24 is exemplary, and the support plate 2200 may include guide portions 2230 having various shapes illustrated in the disclosure.

Referring to FIG. 24, the support plate 2200 may further include a reinforcement portion 2240. The reinforcement portion 2240 may be provided on the support portion 2220 to reinforce the rigidity of the support portion 2220. The reinforcement portion 2240 may be fixedly coupled to the upper side of the support portion 2220, e.g., by an adhesive member or welding. The reinforcement portion 2240 may have substantially the same thickness as the support portion 2220 or the elastic portion 2210. However, the disclosure is not limited thereto.

According to an example, the reinforcement portion 2240 may be integrally formed with the support plate 2200. The reinforcement portion 2240 may be formed to integrally extend from the guide portion 2230. For example, the reinforcement portion 2240 may be formed to integrally extend from the second portion 2232 of the guide portion 2230.

The support plate 2200 according to an embodiment of the disclosure is manufactured so that the elastic portion 2210, the support portion 2220, and the reinforcement portion 2240 are integrally formed, thereby omitting a process of attaching a separate supporting member to the support plate. However, the disclosure is not limited thereto, and the reinforcement portion 2240 and the support plate 2200 may be separately manufactured and then coupled to each other.

When a separate supporting member is attached to the support plate, the separate supporting member may be separated from the support plate by repeated insertion and withdrawal operations of the electronic device (e.g., the electronic device 200 of FIG. 2), thereby causing a product defect. The support plate 2200 according to an embodiment of the disclosure is manufactured so that the elastic portion 2210, the support portion 2220, and the reinforcement portion 2240 are integrally formed, thereby preventing the support portion 2220 from being separated from the support plate 2200 despite repeated insertion and withdrawal operations of the electronic device 200.

Further, according to an embodiment of the disclosure, the support plate 2200 may enable the shape of the support portion 2220 to be formed using a press die in a relatively straightforward manner, thereby simplifying the manufacturing process.

According to an example, the support plate 2200 may be formed using press processing. The plurality of elastic portions 2210 and the plurality of support portions 2220 positioned in the flexible area 2200b of the support plate 2200 may be formed through presswork. For example, the plurality of through holes 2211 formed in the elastic portion 2210 may be formed through a piercing process of the presswork. The process of forming the through hole 2211 of the elastic portion 2210 and the process of forming the bending shape of the support portion 2220 may be implemented as individual dies but, without limitations thereto, may be implemented as one progressive die.

A slidable electronic device according to an embodiment may comprise a flexible display 230 configured to be at least partially deformable, and a support plate 240, 240-1, 240-2 disposed on a rear side of the flexible display 230, and including an elastic portion 241 at least partially having a plurality of through holes 241a and a support portion 242 protruding relative to the elastic portion 241, alternately arranged. The support plate 240, 240-1, 240-2 may include a guide portion 243, 243-1, 243-2 extending from an end portion of the support portion 242 and formed to at least partially have a curvature.

According to an embodiment, the support portion 242 may include a first lateral side 242a extending from one side of the elastic portion 241, an upper side 242b vertically extending from the first lateral side 242a, and a second lateral side 242c extending from the upper side 242b to face the first lateral side 242a.

According to an embodiment, the support plate 240, 240-1, 240-2 may further include at least one of a cushioning material or a heat dissipation material filling an inner space 242d defined by the first lateral side 242a, the upper side 242b, and the second lateral side 242c of the support portion 242.

According to an embodiment, the guide portion 243, 243-1, 243-2 may integrally extend from one end of the upper side 242b.

According to an embodiment, the guide portion 243 may include a first portion 243a extending to form the same plane as the upper side 242b, and a second portion 243b extending from the first portion 243a, having a curvature, and bent to contact an upper side of one end of the upper side 242b.

According to an embodiment, the support plate 240 may further include a reinforcement portion 245 integrally extending from the second portion 243b and disposed to contact the upper side 242b of the support portion 242.

According to an embodiment, the guide portion 243-1 may include a first first portion 243a-1 extending to form the same plane as the upper side 242b, and a first second portion 243b-1 extending from the first first portion 243a-1, having a curvature, and bent to be rolled into a spiral shape.

According to an embodiment, a thickness of the upper side 242b of the support portion 242 may be substantially the same as a thickness of the elastic portion 241.

According to an embodiment, the guide portion 243-2 may include a second first portion 243a-2 extending from one end of the upper side 242b to form the same plane, a second second portion 243b-2 extending from the second first portion 243a-2 to be perpendicular to a length direction of the support portion 242 and form the same plane as the second first portion 243a-2, and a 3-2th portion 243c-2 extending from the second second portion 243b-2, having a curvature, and bent to contact an upper side of the second first portion 243a-2.

According to an embodiment, the slidable electronic device may further comprise a rail frame 224 provided so that the guide portion 243, 243-1, 243-2 is inserted and slidable therein.

According to an embodiment, the rail frame 224 may include a guide rail 2242 for providing a path where the guide portion 243, 243-1, 243-2 may be inserted and slides. The guide rail 2242 may include a first rail 2242a extending horizontally,

a second rail 2242b extending from the first rail 2242a and having a curved path along a curved surface 2241 of the rail frame 224, and a third rail 2242c extending from the second rail 2242b in a direction parallel to the first rail 2242a.

According to an embodiment, a width of the second rail 2242b may be larger than a width of the first rail 2242a or a width of the third rail 2242c.

According to an embodiment, the support portion 242 may include at least one bead 244 recessed to reinforce rigidity.

According to an embodiment, the guide portion 243, 243-1, 243-2 may be formed to be bent by hemming treatment.

According to an embodiment, the elastic portion 241 may include a plurality of oval through holes 241a elongated in a direction perpendicular to a length direction of the support plate 240, 240-1, 240-2.

A slidable electronic device according to an embodiment may comprise a flexible display 230 configured to be at least partially deformable, and a support plate 2200 disposed on a rear side of the flexible display 230, and having an elastic portion 2210 including a plurality of through holes 2211 and a support portion 2220 without a through hole 2211 alternately positioned along a length direction of the support plate 2200. The support portion 2220 may include a guide portion 2230 extending from a lengthwise end portion of the support portion 2220 and at least partially having a curvature.

According to an embodiment, the guide portion 2230 may include a first portion 2231 forming a plane coplanar with the support portion 2220, and a second portion 2232 extending from the first portion 2231, having a curvature, and bent to contact an upper side of one end of the support portion 2220.

According to an embodiment, the support plate 2200 may further include a reinforcement portion 2240 integrally extending from the second portion and disposed to contact a surface of the support portion 2220.

According to an embodiment, a support plate for supporting a flexible display 230 including a flat area 230a and a bending area 230b may comprise an elastic portion 241 and a support portion 242 alternately disposed, wherein the elastic portion 241 includes a fixed area positioned to correspond to the flat area 230a and a plurality of through holes 241a positioned on the same plane as the fixed area 240a and integrally extending from one side of the fixed area 240a, and the support portion 242 is formed to integrally extend and protruded from the elastic portion 241, a flexible area 240b positioned to correspond to the bending area 230b, and a guide portion 243 integrally extending from one end not contacting the elastic portion 241 in the support portion 242 and bent so that at least a portion thereof has a curvature.

According to an embodiment, the support portion 242 may include a first lateral side 242a extending from one side of the elastic portion 241, an upper side 242b vertically extending from the first lateral side 242a, and a second lateral side 242c extending from the upper side 242b to face the first lateral side 242a. The guide portion 243 may include a first portion 243a extending to form the same plane as the upper side 242b, and a second portion 243b extending from the first portion 243a, having a curvature, and bent to contact an upper side of the upper side 242b.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a "device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications, equivalents, and/or substitutes of various embodiments.

## Claims

1. A slidable electronic device comprising:
a flexible display (230) configured to be at least partially deformable; and
a support plate (240, 240-1, 240-2) on a rear side of the flexible display (230), and including an elastic portion (241) at least partially having a plurality of through holes (241a) and alternately arranged with a support portion (242) protruding relative to the elastic portion (241),
wherein the support plate (240, 240-1, 240-2) includes a guide portion (243, 243-1, 243-2) extending from an end portion of the support portion (242) and formed to at least partially have a curvature.

2. The slidable electronic device of claim 1, wherein the support portion (242) includes:
a first lateral side (242a) extending from one side of the elastic portion (241);
an upper side (242b) vertically extending from the first lateral side (242a); and
a second lateral side (242c) extending from the upper side (242b) to face the first lateral side (242a).

3. The slidable electronic device of claim 2, wherein the support plate (240, 240-1, 240-2) further includes at least one of a cushioning material or a heat dissipation material disposed in an inner space (242d) defined by the first lateral side (242a), the upper side (242b), and the second lateral side (242c) of the support portion (242).

4. The slidable electronic device of claim 2 or 3, wherein the guide portion (243, 243-1, 243-2) integrally extends from one end of the upper side (242b).

5. The slidable electronic device of claim 4, wherein the guide portion (243) includes:
a first portion (243a) extending to form the same plane as the upper side (242b); and
a second portion (243b) extending from the first portion (243a), having a curvature, and bent to contact an upper side of one end of the upper side (242b).

6. The slidable electronic device of claim 5, wherein the support plate (240) further includes a reinforcement portion (245) integrally extending from the second portion (243b) and disposed to contact the upper side (242b) of the support portion (242).

7. The slidable electronic device of claim 4, wherein the guide portion (243-1) includes:
a first first portion (243a-1) extending to form the same plane as the upper side (242b); and
a first second portion (243b-1) extending from the first first portion (243a-1), having a curvature, and bent to be rolled into a spiral shape.

8. The slidable electronic device of claim 2, wherein the guide portion (243-2) includes:
a second first portion (243a-2) extending from one end of the upper side (242b) to form the same plane;
a second second portion (243b-2) extending from the second first portion (243a-2) to be perpendicular to a length direction of the support portion (242) and form the same plane as the second first portion (243a-2); and
a 3-2th portion (243c-2) extending from the second second portion (243b-2), having a curvature, and bent to contact an upper side of the second first portion (243a-2).

9. The slidable electronic device of any one of claims 1 to 8, further comprising a rail frame (224) provided so that the guide portion (243, 243-1, 243-2) is inserted and slidable therein.

10. The slidable electronic device of claim 9, wherein the rail frame (224) includes a guide rail (2242) for providing a path where the guide portion (243, 243-1, 243-2) is inserted and slides, and wherein the guide rail (2242) includes:
a first rail (2242a) extending horizontally;
a second rail (2242b) extending from the first rail (2242a) and having a curved path along a curved surface (2241) of the rail frame (224); and
a third rail (2242c) extending from the second rail (2242b) in a direction parallel to the first rail (2242a).

11. The slidable electronic device of claim 10, wherein a width of the second rail (2242b) is larger than a width of the first rail (2242a) or a width of the third rail (2242c).

12. The slidable electronic device of any one of claims 1 to 11, wherein the support portion (242) includes at least one bead (244) recessed to reinforce rigidity.

13. A slidable electronic device comprising:
a flexible display (230) configured to be at least partially deformable; and
a support plate (2200) disposed on a rear side of the flexible display (230), and having an elastic portion (2210) including a plurality of through holes (2211) alternately positioned with a support portion (2220) without a through hole (2211) along a length direction of the support plate (2200),
wherein the support portion (2220) includes a guide portion (2230) extending from a lengthwise end portion of the support portion (2220) and at least partially having a curvature.

14. The slidable electronic device of claim 13, wherein the guide portion (2230) includes:
a first portion (2231) forming a plane coplanar with the support portion (2220); and
a second portion (2232) extending from the first portion (2231), having a curvature, and bent to contact an upper side of one end of the support portion (2220).

15. The slidable electronic device of claim 14, wherein the support plate (2200) further includes a reinforcement portion (2240) integrally extending from the second portion and disposed to contact a surface of the support portion (2220).
